(19) **Europäisches Patentamt**

**European Patent Office**

**Office européen des brevets**

(11) **EP 1 070 287 B1**

(12) **EUROPEAN PATENT SPECIFICATION**

(45) Date of publication and mention
of the grant of the patent:
**11.09.2002 Bulletin 2002/37**

(21) Application number: **98961081.1**

(22) Date of filing: **16.12.1998**

(51) Int Cl.⁷: $G06F\ 9/44$

(86) International application number:
**PCT/DK98/00557**

(87) International publication number:
**WO 99/031581 (24.06.1999 Gazette 1999/25)**

(54) **METHOD AND APPARATUS OF AN ADDRESS ANALYSIS FUNCTION IN A NETWORK EMPLOYING BOOLEAN LOGIC AND PROGRAMMABLE STRUCTURES FOR COMPLETE DESTINATION ADDRESS ANALYSIS**

VERFAHREN UND GERÄT FÜR ANSCHRIFTENANALYSEFUNKTION IN EINEM NETZWERK UNTER VERWENDUNG VON BOOLEANLOGIK UND PROGRAMMIERBARE STRUKTUREN FÜR VOLLSTÄNDIGE BESTIMMUNGSANSCHRIFTENANALYSE

PROCEDE ET APPAREIL D'EXECUTION D'UNE FONCTION D'ANALYSE D'ADRESSES DANS UN RESEAU UTILISANT UNE LOGIQUE BOOLEENNE ET DES STRUCTURES PROGRAMMABLES POUR EFFECTUER UNE ANALYSE COMPLETE D'ADRESSES DE DESTINATION

(84) Designated Contracting States:
**AT BE CH CY DE DK ES FI FR GB GR IE IT LI LU MC NL PT SE**
Designated Extension States:
**AL LT LV MK RO SI**

(30) Priority: **16.12.1997 DK 145797**
**16.12.1997 DK 145897**
**17.09.1998 DK 117498**

(43) Date of publication of application:
**24.01.2001 Bulletin 2001/04**

(73) Proprietor: **IP Semiconductors A/S**
**2860 Soborg (DK)**

(72) Inventors:
• **THERKILDSEN, Magnus, Stig**
**DK-2200 Copenhagen N. (DK)**
• **JESSEN, Jeppe, Rune**
**DK-3670 Veks (DK)**

(74) Representative: **Wittrup, Flemming et al**
**Hofman-Bang Zacco A/S**
**Hans Bekkevolds Allé 7**
**2900 Hellerup (DK)**

(56) References cited:
**WO-A1-90/09001** **WO-A1-95/08797**
**WO-A1-96/00945** **WO-A1-97/39406**
**US-A- 5 138 615** **US-A- 5 251 205**
**US-A- 5 386 413** **US-A- 5 490 258**

• **Self-Modifying Designs are in Vogue (Programming Silicon), CLIVE MAX, MAXFIELD ELECTRONIC ENGINEERING TIMES, 1995, No. 845, page 56, Publication Date: 24-04-95 (ISBN: 1-878707-22-1).**

## Description

### Introduction

The present invention relates generally to reprogrammable logic device structures, and more particularly to structures allowing the use of "don't cares" and priority functions. The logic device structures may be used in analyzing systems, such as communication network address analyzing systems, but the logic device structures may also be used as part of a micro-processor architecture.

### Background for the present Invention

#### *Data Flows, Tasks and Events in a Network Switch*

To provide a background and understanding for the system to which (but not limited to) the present invention relates, a digital communication network switch/router will be described. The function of a network switch or router is to accept data packages from network connections, analyze each data packet, and transmit the data packet to an appropriate connection, defined by the procedures and protocols of the network.

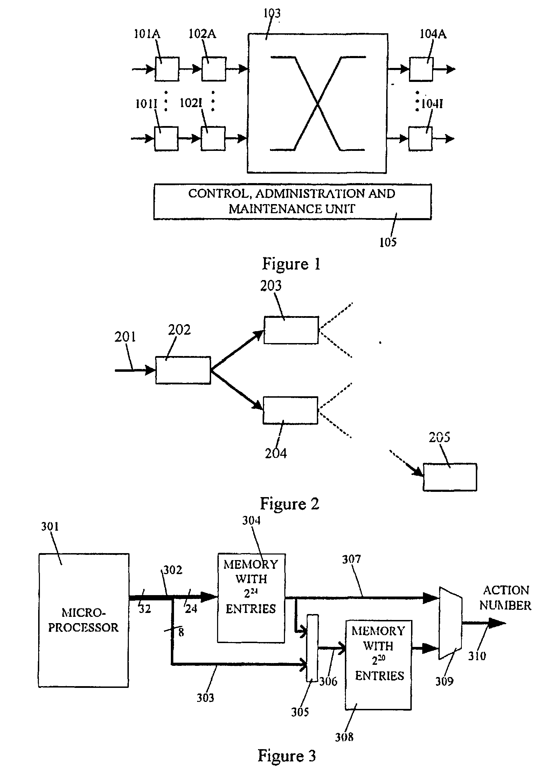

Figure 1 illustrates a general functional arrangement of a typical network switch in which the present invention may advantageously be employed. The system shown in Figure 1 comprises:

- A set of input devices, 101A-101I, which connect the network element to the different physical mediums used for transportation of the data from other network elements or terminals
- A set of elements denoted Forwarding Engines (FE), 102A-102I, which among other things analyses the destination network addresses of the incoming packages and sets up the best route for the incoming data through the network element. The FEs are the elements that can advantageously employ the present invention.
- A switch, 103, which transports the data package from a given input to an output determined by the input FE, based on the results of the address analysis of said FEs, 102A-102I, which selects the route through the switch
- A set of output devices, 104A-104I, which connects the network elements to the physical medium by which the data is transmitted to other routers, switches or terminals
- A Control, Administration and Maintenance Unit (CAMU), 105, which manages and controls the router. Note that for reasons of simplicity, only the first and the last input elements, 101A-101I, pre-process elements, 102A-102I, and output elements, 104A-104I are shown in Figure 1.

It should also be noted that the number of input and output channels is not fixed but may vary depending on the implementation of the router.

The addresses are in some systems also used to keep a record of the transmission; e.g. who transmitted the data and to whom, for how long, and what was the amount of data being transmitted, etc. These records are used in the network for such tasks as network maintenance, network statistics, network optimization, accounting etc.

In order to handle the traffic flow and construct the needed records the unique address must be analyzed by the FE elements in the switches. The result of this analysis may be either the path, which the data has to use through the switch, the information needed to construct the record of the data transmission, or the like. In the following, these results will all be denoted the result of the address analysis or the action code. As an example of a communication network, the Internet, based on the Internet Protocol version 4 (denoted IPv4), the unique network address used for determining the route through the switch is given on binary form and is 32 bits long. This network address is divided into 2 subfields: 1) the subnetwork number or the prefix, and 2) the host number. Routers, who routes data between subnetworks uses the prefix number to route the data through the network.

The length of the prefix may vary from subnetwork to subnetwork, and since a situation may occur where two prefixes of different length but with the same binary pattern in the first n bits must be routed in two different directions, a method for longest prefix match is used. An example of this is explained in the Internet standard: Request For Comments 1519, Classless Inter-Domain Routing (CIDR): an Address Assignment and Aggregation Strategy. Longest prefix match finds the longest prefix - the one with the most specific route information - which the address of the package to be routed matches, and routes the packages according to this prefix. This problem will further be described later in the present application. It is the speed of this address analysis that the present invention will improve.

In each of the network nodes (routers) information is stored regarding how to route incoming traffic according to the destination address of each data package. The information is usually stored in a table where the relationship between bit patterns of the destination address (the network address) and the action codes are registered. (We have chosen to call this table a routing table, but other expressions may be found in the literature, such as "network address table", or just plainly "table"). As an example consider the routing table shown below:

| Bit Pattern in Destination Address | | | | | | Action Number (E.g. which port to route to) | Priority | Line no |
|---|---|---|---|---|---|---|---|---|
| $a_1$ | $a_2$ | $a_3$ | $a_4$ | ... | $a_n$ | | | |
| 0 | 1 | 1 | 1 | ... | x | 2 | 4 | 1 |
| 0 | 1 | 1 | x | ... | x | 3 | 3 | 2 |
| 0 | 1 | x | x | ... | x | 5 | 2 | 3 |
| 0 | 0 | 1 | x | ... | x | 1 | 3 | 4 |
| . | . | . | . | ... | . | . | . | . |
| . | . | . | . | ... | . | . | . | . |
| 0 | 0 | x | x | ... | X | 1 | 2 | k |

Table 1 Example of routing table

In this table a 0 or a 1 indicates that the bit at the specific position must be 0 or 1 respectfully. An "x" symbol indicates that the value of the bit at that specific position is of no importance (this symbol is denoted "dont-care").

A routing table in which the action number represents the path though the switch or router is constructed based on the network topology. The topology of a network is dynamic, which means that though most networks are planned manually, and thus a routing table can be setup by a network manager, most networks experiences instabilities in which certain network paths or certain parts of the network from time to time is inaccessible. In such networks the manually constructed routing table must be updated (automatically by the network) during operation such that the routing table always represents the current network topology.

Another issue of the routing table is the occurrence of multiple entries in the table for which certain destination addresses matches. As an example consider line no. 1, 2, and 3. All of these lines would match if the first four bits (bit $a_1$, $a_2$, $a_3$, and $a_4$) of the destination address to be analyzed are (0111). Since the data package can only travel through one path, a priority between these lines in the routing table must be included - this is indicated in the priority column. In the above example the entry with the highest priority value is selected and the associated action code must be returned. In the case where the first four bits (bit $a_1$, $a_2$, $a_3$, and $a_4$) of the destination address to be analyzed are (0111) in the routing table shown above the action code 2 should be returned. (In other implementations different coding schemes of the priority value may be chosen).

***Problems with prior Software and Hardware Solutions for Address Analysis***

In prior art, the address analysis is done by software algorithms or by specially designed hardware. Software algorithms are typically based on some sort of search procedure using a search tree (e.g. a binary search tree) which contains all the network patterns of which the network address must be matched. The advantage of the software algorithms is the flexibility of updating and maintaining the network functions. When new protocols, new functions and/ or new algorithms are to be implemented, only the software of the system needs to be updated in most cases.

The drawback of this method is the delay the analysis in software introduces. For large networks with a large number of terminals the address analysis can be a very time consuming task and thus limit the performance of the network.

In addition a search tree must be updated regularly and the tree must be balanced for optimal search speed. During the time period in which these maintaining tasks are carried out, the system cannot perform any network address analyses at all. This will even further decrease the overall performance of the system.

The delay of the address analysis is much shorter in systems implemented with specially designed hardware. The hardware can be optimized for one particular function and hence the delay can be kept at a minimum.

Hardware implementations using search trees do exist, but even though a hardware implementation is faster, the memory consumption and the number of needed hardware devices may be significant, and the time needed to maintain the search tree and keep it balanced may also still be significant.

A typical implementation in prior art software solutions uses a table lookup function based on search trees. Figure 2 shows an example of a binary search tree. The search method is an iterative process, which search through a branch of the search tree. At each element in the branch the following procedure is carried out (in the following example it is assumed that the search algorithm is currently examining the entry element, 202, of the search tree in Figure 2):

1. It is verified if the network address number that is being analyzed matches the network number (or pattern) of the current element (202). If there is a match the function returns the action number associated with that particular element (in this case 202)

2. If no match was found the procedure continues on one of the two child elements (in this case either 203 or 204). The procedure selects the top element (in this case 203) if the network address number is larger than the network number (or pattern) of the current element (in this case 202). If not, the procedure continues at the bottom branch (in this case with element 204).

The function starts at the entry point, 201, with the first element, 202, and continues until a match has been found or till the last element of the branch is encountered (205).

It is possible to extend this tree search in a way such that longest prefix matching is accomplished. This is done by using sub-trees in the nodes that acts as match for more than one action number. This means that the search algorithm must investigate a local tree, thereby producing the correct action number.

By using this iterative method of table lookup the software function can find the needed action code. Using this method the software function only has to compare a few number of elements in the search tree to find the right match. For tables found in larger networks the software function may typically have to search 10-20 elements in the search tree in order to find a match, which still may take a significant amount of time. In addition the system has to maintain the search tree so that it is balanced, i.e. so that the number of elements which the software function may have to search before it reaches the final element in a given branch (e.g. element 205) is roughly the same for all branches. Such a maintaining function obstructs the use of the search tree for an address analysis function and hence limits the performance of the software solution.

Some prior art hardware solutions do also employ a search tree. Though the speeds of these hardware solutions are faster than their counterpart software solutions, they still have to look up 10-20 entries in the search tree to find a match in a larger network. In addition they too have to maintain the search tree.

Another solution ("Routing Lookups in Hardware at Memory Access Speeds", Pankaj Gupta, Steven Lin, and Nick McKeown, IEEE Infocom April 1998, San Fransico) is based on memory lookup's, where a memory bank holds information about the relation between network addresses and action numbers. Figure 3 shows a system, where a microprocessor, 301, is used for addressing a memory, 304, using the network address, 302. Basically, the memory will output the action number, 307, stored in this memory location. The size of this action number is likely to be implemented as 16 bits.

If all network addresses should be implemented with a 32-bit network address, this would require $2^{32}$ entries of 16 bits in the memory, 304, which must be considered significant measured in cost and printed circuit board area. However, as the length of the prefix, which is used for determining the action number, is usually below 24 bits, a method where only $2^{24}$ entries is addressable in the memory is used. This means that only 24 bits of the network address is used for the look up, which is done by splitting the network address, 302.

However, in order to resolve the action number, 310, in cases where more than 24 bits must be used, a second memory is introduced, 308. For determining whether this second memory should be used, one of the 16 bits in the main memory entries, 304, is reserved for the purpose. In the situation where more than 24 bits should be used for resolving the action number, the remaining 15 bits of the main memory output is used together, 305, with the remaining 8 bits, 303, of the network address, for pointing out the address in the second memory. This is illustrated as 306. The second memory, 308, cannot cover all possible entries, but the method is based upon the fact, that only few network addresses need more than 24 bits for determining the destination.

The action number output for the entire system, 310, is a selection, 309, between the two memory outputs. The split-point of the network address into 24 and 8 bits can be changed to accommodate situations where this is advantageous, i.e. where the prefix distribution is different.

The disadvantages of this method is:

1. The large amount of memory (33 megabyte (MB) for the above example) cannot with existing technologies be integrated in one integrated circuit. This will limit the speed of the function, as the communication between more integrated circuits is needed.

2. This will also affect the cost of a system as around 19 circuits are needed, using existing technologies. In addition, the needed area of this solution will be significant in today's printed circuit board systems.

3. Updating the memory will for the worst case situation use 17,545 memory cycles, in which incoming Internet packages must be stored before they can be processed, or discarded. This will either introduce more memory usage and degrade the overall performance, or result in a significant package loss.

4. The method is based on assumptions of the prefix distribution, which may vary in different networks.

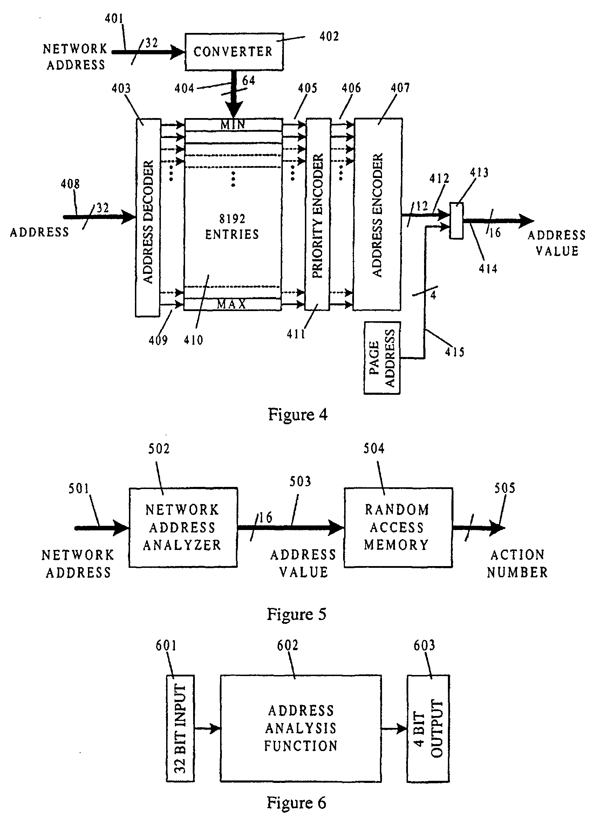

MUSIC semiconductors has implemented an address analysis method which is based on Contents Addressable Memory (CAM). The following will describe the core implementation, which is intended for a single integrated circuit. Figure 4 will act as illustration. The CAM, 410, is used to store information, which will enable the method to output an address value, 414, when a network address, 401, is applied. The actions performed when applying a network address is described below:

1. The converter, 402, will expand the 32 bit network address to 64 bits, 404, which is required as ternary logic is used in the CAM. Ternary logic enables "don't care" values to be used in the comparisons.

2. The CAM, 410, will compare the 64 bit network address, 404, with the value stored in all entries, and assert one or more match signals, 405, to indicate identity between the network address and the value of the corresponding entry.

3. If more than one match signal, 405, is asserted, a selection must be initiated, as only one address value is expected (only one destination for a packet). This corresponds to the longest prefix match. A priority encoder, 411, will select the entry with the lowest address. Longest prefix match, using this method, is conditioned that the CAM entries are sorted by prefix length.

4. The priority encoder, 411, will assert at most one signal, 406, to indicate which entry was selected.

5. The entry address, 412, is encoded by an address encoder, 407. This is concatenated, 413, with a page address, 415, which is a value that can be programmed into the circuit. The address value, 414, is then provided at the output.

The external address bus, 408, is used together with control signals, to program values into the CAM entries. This is done by decoding, 403, the address and applying the result to the CAM programming lines, 409.

Since the address value is directly associated with the entry of the corresponding network address in the CAM, and since the entries in the CAM must be sorted by prefix length, it is not possible to freely associate network addresses and address values, and thus, the address value cannot be used as an action number. The result of this is that an external translation must be performed. Figure 5 illustrates how this need is met. The network address analyzer, 502, described above, will assert the address value, 503, when a network address is applied, 501. The address value is applied to a Random Access Memory (RAM), 504, which will map the address value, 503, to a freely chosen action number, 505.

If the network analyzer is used in a large network router, the amount of entries that can be implemented in the network analyzer using existing technologies (8K in the largest MUSIC integrated circuit) will not be sufficient for covering all possible network addresses. Therefore more than one analyzer is needed in some situations. Since the rule of longest prefix match must still be met, a network analyzer used in conjunction with others will have to communicate through dedicated global control signals, and wait for each other to calculate the best match.

The disadvantages of this method is:

1. The necessity of an external memory will limit the overall performance of the system.

2. To maintain correct sorting, when updating an entry, it is likely that many entries will have to be modified. This means that a single network address update may cause a large amount of idle time, for which packets must be either stored or discarded.

3. When more network analyzers are needed, the overall performance is reduced, since the calculation in one analyzer is dependent on other analyzers.

Another solution for the route decision in a Forwarding Engine, described in PCT application WO 95/33324, employs a specially designed routing function based on a special addressing scheme and a routing decision employing a single (optical) AND gate. One of the main objectives of this invention has been to find as simple a decision function as possible, due to the limitations of digital logic in the optical domain.

The network addresses of the described system are selected such that two specific functions can be applied - one to find a specific match and one to be employed as a routing function.

The binary address words are chosen from the restricted set of n-bit words satisfying the property that for any two words A (consisting of address bits $a_1$, $a_2$, $a_n$) and B (consisting of address bits $b_1$, $b_2$, $b_n$) in the set, $A \otimes B = 0$ if and only if A=B otherwise $A \otimes B = 1$, where the expression $A \otimes B$ denotes the Boolean expression:

$$A \otimes B = \sum_{i=1}^{n} a_i \cdot \sim b_i \qquad \text{Eq. 1}$$

and $\sim$x denotes the logical complement of x. Eq. 1 can thus be used to find an exact match between network addresses. The set of network addresses are limited such that for an n-bit wide address word only (n being even):

$$\frac{n!}{\left[\left(\frac{n}{2}\right)!\right]^2} \qquad \text{Eq. 2}$$

network addresses can be employed.

By sorting the restricted set of network addresses WO 95/33324 claims that a simple routing function can be set up for a simple ring network topology. In this ring topology each node only has to decide if the package being analyzed is to be sent "left" or "right" to the adjacent network nodes (routers). The route decisions are made-by the use of predetermined discriminator words, and the function defined as:

$$A \oplus D = \sum_{i=1}^{n} a_i \cdot d_i \qquad \text{Eq. 3}$$

where A (consisting of address bits $a_1$, $a_2$, $a_n$) is the network address to be analyzed and D (consisting of address bits $d_1$, $d_2$, $d_n$) is the predetermined discriminator word. Each node (router) in the ring holds a predetermined and in (optical) hardware implemented discriminator word and an (optical) implementation of the function of Eq. 3. If the destination address of the package being analyzed and the predetermined discriminator word together makes the function of Eq. 3 return 0 the node directs the package in one direction, if the result is 1 the package is directed in the opposite direction.

The main drawbacks of this solution are that:

1. The address space is limited and only a specific set of network addresses can be used. Since the employed addressing scheme is not used by most main-stream network protocols (e.g. Asynchronous Transfer Mode (ATM), Ethernet, Internet Protocol etc.) the method cannot be used by these network protocols.
2. The network topology is limited to that of a ring topology build with two-port switches since the type of decision that it is possible to make is only a "right" or "left", or 1 or 0 type of decision, since the output of Eq. 3 is a single bit. Most networks is not limited to this kind of topology, but uses other types of structures (buses, stars, mesh and combinations of all of these) and network elements with more than two ports.
3. The predetermined nature of the discriminator words makes it difficult to change or modify an installed network, since new discriminator words might be needed in all or some of the network nodes (routers).
4. The discriminator words in the nodes (routers) are implemented with delay elements in the optical domain and cannot be changed once installed. Thus in order to change the network new nodes (routers) must be installed.
5. To add a new network node it is required to re-build the entire system, since an expansion needs a new set of network addresses, and thus a new set of nodes.
6. If one node fails the entire system will not function and thus be useless.

The present invention overcomes these limitations such that:

1. The present invention can be used for any addressing scheme and any network protocol since the Boolean function(s) are not fixed or predetermined and can be of any form described by sum-of-products.
2. The present invention simplifies the task of changing/updating the network topology since the Boolean function (s) of the network address analysis function can be modified/re-programmed
3. The present invention can be employed in routers with more than two ports since it can handle action numbers with multiple bits.

## Summary of the Invention

The outcome of an address analyzing process is in most cases used to select one of a few possible actions, e.g. which path through a router the data package should flow, which counter to increment, etc. Each of the possible actions can be assigned a unique number - an action number - and a function describing the relationship between the network addresses and the action number can be specified. This function may be called an address analysis function. The prior art gives examples in which the address analysis function is implemented by a method that is denoted table lookup. These prior art solutions use a table organized in a suitable way, and searches this table using software or hardware routines and methods.

From the previous discussion it should be understood that there is a need for a method and a system for analyzing input words, where the analyzing process operate at hardware speeds, and where the analyzing processing functions easily can be programmed and/or updated.

Such a solution is provided according to a first aspect of the present invention, which provide a method of analysing input words or patterns for use in an analysis system, said method comprising an analysis phase of inputting at least one input word comprising a plurality of bits to be analysed, and processing said at least one input word thereby providing an output word comprising one or more bits, characterized in that said processing, comprises a step of performing by one or more logic devices one or more calculation rules, each calculation rule using all bits of said at least one input word and each calculation rule resulting in an output bit of said output word, the number of calculation rules being equal to the number of bits in said output word, said calculation rules being at least part of one or more processing functions used for determining said output word from said at least one input word.

Such a method may advantageously be used as a method for analyzing network addresses, where the input words to be analyzed represent network addresses in a communication network, and the analysis system is an address analysis system. Here, it is preferred that the output word has the form of an action number, and it is also preferred that the input word and/or the output word comprises more than one bit.

It should be understood that the one or more programmable logic devices (PLD) of the analysis system preferably have a structure which is very well suited for processing logic functions. It is therefore preferred that the calculation rules comprise one or more logic functions. Such logic functions may be one or more fuzzy logic functions, but in a preferred embodiment, the calculation rules comprise one or more Boolean logic functions, where all the calculation rules may be Boolean logic functions.

Here the Boolean logic functions can be defined by a sum of product terms, and it is preferred that a calculation rule for a given bit of the output word is calculated as a sum of product terms, said product terms each being associated with the bits in the output word that an input word should activate.

During processing of the input word, the input word may be pre-processed into a predetermined input word format, and the pre-processing may then be followed by the step of performing the one or more calculation rule operations. The output word may then be determined based on the result(s) of the calculation rule operation(s), but the result of the calculation rule operation(s) may also be an intermediate output word, which may then be post-processed in order to obtain the output word.

Thus, by performing or operating the calculations rules, a multiple bit input word or a multiple bit pre-processed input word may be processed by a number of calculation rules, with each calculation rule resulting in an output bit of a multiple bit output word or intermediate output word, and with the number of calculation rules being equal to the number of bits in the output word or intermediate output word. Since the calculation rules are performed by use of the programmable logic device(s) implemented in hardware and as previously described, it should be understood that the output of a calculation rule operation may be obtained within one clock-cycle.

The analysis of the present invention may advantageously be used in an address analysis comprising a longest prefix address analysis operation, where the longest prefix address analysis operation preferably is part of the calculation rule operation(s).

According to an embodiment of the first aspect of the present invention, it is preferred that one or more processing function(s) comprise one or more prioritizing function(s), where the prioritizing functions may be part of the calculation rules. A prioritizing function may be implemented in a programmable logic device, which may then comprise a re-programmable priority element or function (PPE) for prioritizing between several possible output results being matched by the same input word.

In order to process the processing functions or calculation rules, the programmable logic device structure may comprise an AND-processing plane for obtaining product terms as a function of calculation rule inputs, where the programming of the AND plane may allow the use of "don't cares" of input bits. The programmable logic device structure may also comprise an OR plane for obtaining sum of product terms from the AND plane to thereby derive calculation rule output results.

When using Boolean logic functions, the calculation rule output result may be determined by giving different priorities to different Boolean functions to be processed.

When product terms are obtained in the AND plane, these product terms may be prioritized to thereby select one of several activated product terms. Here, the programmable priority element may assign a prioritizing function or a priority value or number to each of the simultaneously activated product term. Preferably, the product term having the highest priority value or number should be selected. The selected product term may then be forwarded to the OR plane in order to obtain a calculation rule output result.

If the programmable priority element assigns priority numbers to the product terms, such numbers may represent weight values or priority codes. Preferably, weight values may be assigned to each product term. Each of the assigned weight values may equal the number of "antifuses" programmed in the AND plane for generating that product term.

In order to easily update the analysis system, the analysis methods according to the first aspect of the invention may further comprise a learning phase, wherein the analysis system is updated based on received information of the relationship between network addresses, priorities and/or action numbers. The analyzing phase should preferably be halted during said updating. The updating should preferably comprise a programming or re-programming of the one or more programmable logic devices.

When used in a communication network, the analysis system may be updated when changes in the communication network occurs. Such changes may comprise one or more of the following: new terminal addresses, changes of locations of network terminals, and changes in network topology.

The first aspect of the present invention also provides a system for analysing input words or patterns, said system comprising

means for receiving at least one input word comprising a plurality of bits to be analysed, and means for processing said at least one input word thereby providing an output word comprising one or more bits, characterized in that said system comprises one or more logic devices for performing one or more calculation rules, each calculation rule using all bits of said at least one input word and each calculation rule resulting in an output bit of said output word, the number of calculation rules being equal to the number of bits in said output word, said calculation rules being at least part of one or more processing functions used for determining said output word from said at least one input word.

Here, the analysis system may advantageously be a network address analysis system, where the input words to be analyzed represent network addresses in a communication network. Preferably, the output word may have the form of an action number, and it is also preferred that the input word and/or the output word comprises more than one bit.

It is preferred that the programmable logic device(s) is(are) adapted for performing logic functions. Hence, the calculation rule may comprise one or more logic functions. As discussed previously, such functions may be fuzzy logic functions, but they may also be Boolean logic functions, with preferably all the calculation rules being Boolean logic functions. The Boolean logic functions may be defined by sum of product terms, and a specific calculation rule may comprise all the product terms pointing to the same bit of the output word.

The processing functions of the analysis system may also comprise one or more pre-processing functions and/or one or more post-processing functions. By use of the logic device(s), a multiple bit input word or a multiple bit pre-processed input word can be processed by using a number of calculation rules, where each calculation rule may result in an output bit of a multiple bit output word or intermediate output word, with the number of calculation rules being equal to the number of bits in the output word or intermediate output word. When performing a logic function calculation, where the logic function is programmed into the logic device(s), the output of a calculation rule operation may be obtained within one clock-cycle.

In a preferred embodiment of the analysis system, the programmable logic device(s) comprise(s) a reprogrammable priority element or function (PPE) for prioritizing between several possible output results being matched by the same input word. The programmable logic device may also further comprise an AND-processing plane for obtaining product terms as a function of calculation rule inputs, where the programming of the AND plane may allow "don't cares" of input bits. It is also preferred that the programmable logic device comprises an OR-processing plane for obtaining sum of product terms from the AND plane to thereby derive calculation rule output results. The priority element may be adapted to prioritize by selecting the activated product term having the highest priority value or number.

In order to easily program or update the logic devices, which updating may be performed before an analysis procedure or take place during the above describe learning phase, it is preferred that the programmable logic device(s) comprise(s) memory logic cells, where each cell comprises a re-programmable memory element for storing a match-value and preferably also a logic element for comparing an input bit value to a stored match-value. Hence, the programming or re-programming of new calculation rules into the programmable logic device hardware may be performed by programming the memory elements. Here, the programming of changes in the relationship between one input word or address and the associated priority number and output word or action number may be done in one clock-cycle or one memory-write cycle.

It should be understood that the programmable logic device(s) of the analysis system may be implemented in a single integrated chip. Furthermore, the processing functions for performing the analysis may be implemented by a processing unit in a single integrated chip.

**EP 1 070 287 B1**

In a second aspect of the present invention there is provided a speed improved micro-processor architecture. Such a micro-processor may be used in software applications in which the employment of bit field analysis limits the performance of the application.

Thus, in accordance with the second aspect of the present invention, there is provided a single chip micro-processor architecture, said architecture may comprise

an instruction decoding unit,
an address calculation unit,
input/output elements,
an arithmetic logical unit (ALU), and
a programmable logic execution unit (PLEU).

Here the programmable logic execution unit is preferably adapted for performing one or more logic functions, with the logic execution unit being re-programmable thereby allowing implementation of new logic functions.

It is preferred that the programmable logic execution unit is adapted to perform Boolean logic functions.

In order to easily program or update the programmable logic execution unit, this unit may comprise memory logic cells, where each cell comprises a re-programmable memory element for storing a match-value. The unit may also comprise a logic element for comparing an input bit value to a stored match-value. It is preferred that the memory elements are implemented by use of Static Random Access Memories (SRAM) or Dynamic Random Access Memories (DRAM).

The logic elements may preferably be implemented by use of MOS-technology and/or CMOS-technology.

By use of such memory logic cells or memory elements, the programming or re-programming of new logic functions into the programmable logic execution unit is performed by programming the memory elements, said programming preferably being done in one clock-cycle or one memory-write cycle. The different logic functions can be programmed into the logic execution unit by basic instructions from the internal instruction unit or by instructions from an external control unit via the input/output elements.

In a preferred embodiment the logic execution unit comprises one or more logic devices or elements, which may have the form of a programmable logic array element. Here, the logic execution unit may comprise registers for storing states of the logic device(s) or element(s). It is also preferred that the logic execution unit comprises a priority function unit, with the priority function unit preferably being re-programmable. The priority function unit may be part of a programmable logic device or programmable logic array.

In order to perform logic functions, the logic execution unit may comprise an AND-processing plane structure and/or an OR-processing plane structure. The priority function unit may be structured to prioritize product terms obtained from the AND plane. Such prioritization may be needed if several product terms are activated by the same input to the logic unit.

It should be understood that a micro-processor having an architecture according to any of the embodiments of the second aspect of the present invention may be programmed to in such a way that it can execute bit field analysis in one basic micro-processor instruction.

It is also within the scope of the present invention to provide an electronic structure or building block which can be easily programmed or updated.

Thus, according to a third aspect of the present invention there is provided a re-programmable electronic structure for comparing an input signal of one or more bits with stored or pre-programmed match-values, said structure comprising

one or more memory logic cell(s) or element(s) (MLC), each cell comprising at least one re-programmable memory element for storing a match-value. It is furthermore preferred that a memory logic cell comprises at least one logic element for comparing an input value to the stored match-value.

Preferably, one memory element stores a one bit value, and it is also preferred that the input value to be compared to the stored match-value is a one bit value. Thus, a memory logic cell (MLC) may comprise a single one bit memory element and a logic element for comparing a one bit input to the stored one bit. Here the output result may be a "truth" or a "false".

However, if a "don't care" is also allowed as in the analysis, both "truth", "false" and "don't care" should be stored. This may demand a 2 bit word to be stored, thereby demanding two memory elements. Such a cell comprising two single bit memory elements may form at least part of a ternary memory logic cell, which may also comprise a logic element for comparing a one bit input to the 2 bit stored word.

The memory logic cell may be arranged so that logic element compares the input value to the stored value by use of one or more logic functions. Said logic functions may be logic AND functions and/or a logic OR functions, as well as inverting functions.

Different memory cell technologies may be used, but it is preferred that the memory element is implemented by use of a Static Random Access Memory (SRAM) cell. However, a memory element can also be implemented by use of a Dynamic Random Access Memory (DRAM) cell. Different technologies may be used for the logic elements, but it is preferred that the logic element is implemented by use of MOS-technology and/or CMOS technology.

In a preferred embodiment the memory element or cell, which stores the match-value, has two outputs for outputting both the truth match-value and the complementary match-value.

The logic element used for the memory logic cell may have various functions and various configurations. The logic element may for example have at least two inputs and at least one output.

Here, a memory logic cells may be structured so that an input bit signal is fed to a first logic element input and the complementary of the input bit signal is fed to a second logic element input, with a comparison output signal being given on the logic element output.

In another embodiment the memory logic cell may be structured so that only the "truth" input value is used as input to the comparing logic.

In an embodiment of the memory logic cell, the logic element may be implemented by use of 4 transistors.

In a preferred embodiment of the electronic structure, several memory logic cells may be arranged to form at least part of a memory logic structure (MLS), where each memory logic cell has as input an input bit signal and/or its complementary signal. Here, the outputs of several memory logic cells may be AND'ed or OR'ed together.

As discussed above, it is also a preferred embodiment to have two memory elements or two memory logic cells grouped together to form a ternary memory logic cell, to thereby allow a "don't care" output. Here, the two memory elements may be programmed with the same match-value in order to allow the "don't care" state. If two memory logic cells are grouped together, the first memory logic cell of the ternary memory logic cell may have an input bit signal fed to the first input and a logic false to the second input, the second memory logic cell may have the complementary of the input bit signal fed to the first input and a logic false to the second input, while the outputs of the first and second memory logic cells may be ANDed together.

The electronic structure may have several ternary memory logic cells arranged to form at least part of a ternary memory logic structure (TMLS), each ternary memory logic cell having as input an input bit signal and/or its complementary signal.

In another embodiment of the electronic structure, several memory logic cells may be arranged to implement a ternary Contents Addressable Memory (CAM).

According to the third aspect of the present invention, there is also provided a re-programmable electronic AND-processing structure or plane, wherein several ternary memory logic cells forms a ternary memory structure (TMLS). The ternary memory logic cells may be chosen according to any of the embodiments of the present invention.

It is also within the third aspect of the invention to provide a re-programmable electronic priority element structure, wherein several memory logic cells forms a memory logic structure (MLS). The memory logic cells may be chosen according to any of the embodiments of the present invention.

It should be understood that any of the described embodiments of the electronic structure according to the third aspect of the present invention may be used to configure a hardware re-configurable or re-programmable electronic logic device structure (PLD) for processing logic functions.

The present invention also presents a programmable electronic device for processing logic functions.

Thus, according to a fourth aspect of the present invention, there is provided a hardware re-configurable or re-programmable electronic logic device structure (PLD) for processing logic functions, said structure comprising

a re-programmable priority element or function (PPE) for prioritizing between several output results being matched by the same input word.

It is preferred that the logic device structure according to the fourth aspect of the present invention comprises one or more electronic structures according to the above described third aspect of the invention. Thus, the logic device structure may also comprise memory logic cell(s) (MLC), one or more memory logic structure(s) and/or one or more ternary memory logic structure(s) as described in any of the embodiments of the third aspect of the invention.

In order to process the logic functions, the logic device structure may also comprise an AND-processing plane and/or an OR-processing plane. Preferably, the structure comprises a Programmable Logic Array (PLA), where the Programmable Logic Array comprises the AND-processing plane, the priority element and the OR-processing plane.

Here, the priority element, the AND-plane and/or the OR plane may comprise memory logic cells. Furthermore, the memory logic cells may be arranged to form a memory logic structure (MLS) and/or a ternary memory logic structure (TMLS). In a preferred embodiment, the AND-processing plane may comprise a ternary memory logic structure (TMLS), the priority element may comprise a memory logic structure (MLS), and the OR-processing plane may comprise a memory logic structure (MLS).

The logic device structure according to the fourth aspect of the present invention may also comprise a ternary Contents Addressable Memory (CAM) being implemented by use of several memory logic cells, where the priority element may be adapted to prioritize between multiple simultaneously activated match-lines of the CAM, to thereby select the output.

When the logic device structure comprise an AND-processing plane, this AND plane may be adapted to obtain product terms as a function of input words or patterns. Here, the priority element may be adapted to prioritize between several possible output results when more than one product term is activated in the AND plane by the same input word. Preferably, the product terms are assigned priority numbers and the priority element is adapted to select the activated product term having the highest priority number. If the logic device structure also comprise an OR-processing plane, the OR plane may be adapted to obtain sums of the product terms from the AND plane to thereby derive output results. Thus, a product term selected by the priority element may be forwarded to the OR plane in order to obtain an output result.

In an embodiment of the logic device, the structure is adapted to process Boolean functions and the output result may be determined by giving different priorities to different Boolean functions to be processed.

When selecting between activated product terms, the programmable priority element may be adapted to assign a prioritizing function to each of the simultaneously activated product term. Alternatively, the programmable priority element may be adapted to assign weight values or priority codes to product terms obtained in the AND plane to thereby select one of several activated product terms. Here, weight values may be assigned to each product term. Preferably, the weight value assigned to each of the product terms may equal the number of "antifuses" programmed in the AND plane for generating that product term.

It is preferred that the priority element comprises memory logic cells and that the priority function may be programmed by storing corresponding match-values in the memory logic cells.

When the logic device comprises a MLS structure and/or a TMLS structure, the programming can be performed by programming a row in a MLS structure and/or a row in a TMLS structure in one clock-cycle or one memory-write cycle. In order to program the logic device, an input or address word, an associated priority number, and an associated output word may all be inputted to the logic device.

Furthermore it also within the scope of the present invention to provide a method of minimizing Boolean function calculation rules used for performing longest prefix match address analysis.

Thus, according to a fifth aspect of the present invention there is provided a method of minimizing Boolean function calculation rules (BFCR) used for performing longest prefix match address analysis, wherein the calculation rules comprises prioritization rules, and wherein a programmable logic device (PLD) is to be updated or programmed according to a routing table or network address table comprising entries in the form of bit pattern of network addresses and associated output action numbers and priority values or numbers, said method comprising

a) sorting the routing table according to priority numbers, so that for each sub-set (A) of entries in the routing table with the same priority number, the corresponding Boolean calculation rules (R) are set up on the form of sum of products,

b) minimizing the set of calculation rules (R) obtained in the step of sorting so as to obtain a minimized set of calculation rules (R')on the form of sum of products,

c) updating the programmable logic device using the minimized set of calculation rules (R') and the associated priority number, and

d) repeating steps a-c for all sub-set of entries having a common priority number.

When minimizing the calculation rules the known Espresso minimization technique may be used.

It should be understood that it is within the scope of the present invention to use a programmable logic device according to any of the embodiments of the fourth and the third aspect of the invention in any of the embodiments of the analysis methods and systems of the first aspect of the invention, in any of the embodiments of the micro-processor architecture of the second aspect of the present invention, and in any of the embodiments of the minimization methods of the fifth aspect of the present invention.

It should also be understood that an aspect of the present invention is aimed at (but not limited to) an improved address analysis in a communication network using digital technology. It is an object of the invention to perform the address analysis in hardware thereby achieving delays of the analysis function comparable or faster than other known hardware solutions.

It is also within the aspects of the present invention, to minimize the task of updating table of prefixes, by implementing longest prefix matching with programmable logic, and/or prioritization functions.

Another object of the aspects of the present invention is to be able to integrate all of the address analysis into a single integrated circuit as opposed to other known hardware solutions.

The second aspect of the present invention is directed to a speed improved microprocessor architecture for software applications in which the employment of bit field analyses may limit the performance of the application. It is an object of the invention that bit field analyses may be executed as a basic microprocessor instruction thereby minimizing the delay caused by bit fields analyses. It is also an object of the invention that it may be applicable in general microprocessor architectures where an extra execution unit may be integrated into the microprocessor.

Additionally it is also within the aspects of the present invention that logic functions, such as Boolean functions, of a programmable logic execution unit may be reprogrammed in order to perform new types of bit field analyses. By a Boolean function, a function that can be written on a sum of product format may be understood.

## *Brief Description of the Drawings*

For a better understanding of the present invention and in order to show how the same may be carried into effect, reference is made by way of example to the accompanying drawings in which:

Figure 1 shows the essential parts of a communication network switch or router, used for illustrating the background for the present invention.

Figure 2 illustrates the implementation used in common software to solve the problems to which the present invention relates. It shows how a tree structure is used to seach a table with routing information.

Figure 3 shows prior art hardware implementation of problems to which the present invention relates. It shows a system, where a microprocessor is used with a huge amount of RAM, to implement fast translation from network addresses to action numbers, in order to perform a network address analysis.

Figure 4 shows prior art hardware implementation of problems to which the present invention relates. The implementation uses a CAM structure to perform the translation of network addresses to a hardwired value, which cannot be used as an action number directly.

Figure 5 is an illustration to how prior art implementation shown in Figure 4 must be used with external devices (e.g. RAM), to extend the network address translation include an action number output, and thus implementing a network address analysis.

Figure 6 is a block diagram, which illustrates the core of the problem that the present invention solves, by implementing the function of the address analysis function to translate an input to an output.

Figure 7 illustrates how calculation rules are used on the input and output words, thus implementing the present invention by performing network address analysis using said calculation rules. All input bits are used by each calculation rule, to produce one bit in the output.

Figure 8 is a flowchart that illustrates an example of how the present invention can be used to solve the problem of translating a network address into an action number, and updating the relation between network addresses and action numbers.

Figure 9 depicts how a PLD can be used to implement a processing function, which can translate network addresse, into action codes by the use of one or more calculation rules, thus implementing a network address analysis.

Figure 10 is used to illustrate the core components of a PLA, the figure shows an AND plane and an OR plane, which are used for implementing Boolean functions.

Figure 11 shows said PLA with an extension called a Programmable Prioritizing Function, being an element that prioritizes between active product terms. The Programmable Prioritizing Element is a part of the present invention.

Figure 12 is used to illustrate how scalability is achieved with the present invention, the figure shows how global prioritizing signals can be output from the Programmable Prioritizing Function, to be used in a Global Priority Function.

Figure 13 is a system implementing and using a Global Priority Function, by involving several PLA structures, all connected to a Global Priority Function, is illustrated.

Figure 14 depicts Memory Logic Sructures and Ternary Memory Logic Structures, which is defined and used by the present invention, to implement different types of devices to be used for network address analysis.

Figure 15 is a PLA structure implementing both an AND plane possibly using ternary logic, and a programmable priority function, all implemented with LMS and TMLS structures.

Figure 16 is an illustration of how a CAM including programmable prioritizing on the matchlines can be implemented by using a MLS.

Figure 17 illustrates an example of implementing the logic of a Memory Logic element used in the AND plane of a PLA structure.

Figure 18 is an illustration of an example of using two Memory Logic elements to implement either one Ternary Memory Logic Element, or two Memory Logic Elements used for implementing an AND plane, without changing or modifying the logic used.

Figure 19 shows how more PLA structures can be used together for the task of implementing network address analysis.

Figure 20 illustrates how the equations and techniques described to behave as a Programmable Prioritizing Function can be implemented using Memory Logic Structures.

Figure 21 depicts the common components of a microprocessor is shown in the figure, which is used to illustrate how a new execution unit can be implemented, to improve the speed of software programs using bit field analysis.

Figure 22 is an illustration of the common devices often used with a normal microprocessor, and how a Programmable Logic device is be used by a microprocessor in prior art.

Figure 23 is a detailed illustration of an example of implementing Programmable Logic in the core of a microprocessor by letting the instruction decoder use it similarly to a normal execution unit.

Figure 24 is a detailed illustration of an example of the logic used in a memory-logic element, to implement a Programmable Prioritizing Function.

## Detailed Description of the Invention

### *A processing function to perform address analysis*

An address analysis function describing the relationship between a given network address number and an action number can be set up to describe the network address analyzing process as sketched in Figure 6. In this example the network address number is a network address number represented by a 32 bit wide input word, 601, and the action number is represented by a 4 bit wide output word, 603. (Note that the size of the input, 601, and output, 603, word depends on the implementation of the network). Such an address analysis function, 602, calculating the output pattern from the input pattern may be implemented in a number of ways.

Some prior art solutions uses different search methods to lookup the full network address or to lookup a large portion of the network address in a table using either software solutions, indexing in specially constructed memory structures, or using CAM structures. These methods will be denoted table lookup functions. The method described in WO 95/33324 employs a simple and predefined Boolean function a sum of selected address bits found using a predetermined discriminator word to calculate one of two different routes through the switch element. This method will be denoted Sum of Address Bits Function.

The present invention is based on the idea of a processing function (or a calculation function) used to perform the address analysis task. This calculation function uses the network address number to calculate the output action number based on a set of calculation rules. The processing function (or calculation function) does not use a table to find the action number, as do the table lookup functions of prior art and is not limited to a fixed and predetermined sum of address bits function as do the Sum of Address Bits Function solution.

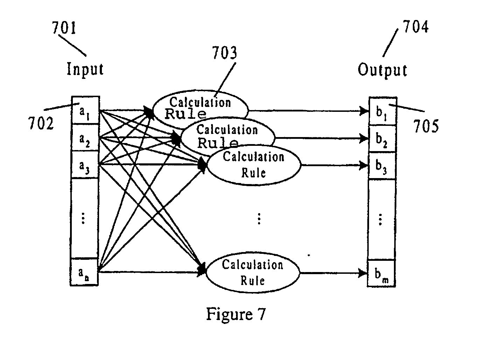

Calculation rules are used for deriving an action number from a network address number, though the principle is not limited to network address numbers. Figure 7 shows how several calculation rules, 703, are used for such a process. The figure illustrates that one calculation rule, 703, is needed for every unit, 705, of the action number, thus calculating an output number unit, 705, from an input number, 701. To be able to update the processing function as the association in the network between network addresses and action numbers change, it is a requirement that the processing function can be reprogrammed. Since the network information is changed regularly, this reprogramming must be carried out while the processing function is in use. Therefore it is part of the invention that the processing function which calculates a result from the input can be reprogrammed and altered, even though the processing function is implemented in hardware and that the hardware is in use.

In a digital environment, the units of network address and of the action number are denoted bits, and a calculation rule, 703, could be a Boolean function. The term Boolean function used in calculation rules in the present invention is a function, of which the result can be described as a sum of products of the input bits, 702, e.g. $b_1(a_1,a_2, a_3) = a_1a_2 + a_2a_3$. The following example shows the Boolean functions needed to calculate the output $(b_1,b_2,b_3,b_4) = (1,0,0,1)$ from either the input $(a_1,a_2,a_3,a_4,a_5,a_6,a_7) = (1,0,1,0,1,x,x)$ or $(1,1,1,0,1,x,x)$, where xs indicate a dont care value (two inputs yielding the same output is equivalent to two network destination addresses connected to the same output of a network switch):

$$b_1(a_1,a_2,a_3,a_4,a_5) = a_1\,\tilde{}\,a_2 a_3\,\tilde{}\,a_4 a_5 + a_1 a_2 a_3\,\tilde{}\,a_4 a_5 \qquad \text{Eq. 4}$$

$$b_2(a_1,a_2,a_3,a_4,a_5) = \tilde{}\,b1(a_1,a_2,a_3,a_4,a_5)$$

$$= (\tilde{}\,a_1 + a_2 + \tilde{}\,a_3 + a_4 + \tilde{}\,a_5)\,(\tilde{}\,a_1 + \tilde{}\,a_2 + \tilde{}\,a_3 + a_4 + \tilde{}\,a_5) \qquad \text{Eq. 5}$$

$$b_3(a_1,a_2,a_3,a_4,a_5) = b_2(a_1,a_2,a_3,a_4,a_5) \qquad \text{Eq. 6}$$

$$b_4(a_1,a_2,a_3,a_4,a_5) = b_1(a_1,a_2,a_3,a_4,a_5) \qquad \text{Eq. 7}$$

It is a straightforward and well known technique to derive Boolean functions from a given set of input and output patterns.

The use of a processing function (or calculation function) based on calculation rules eliminates the iterative processing known from table look-ups, and provides a much more flexible solution than a CAM element. The method of employing multiple and not predetermined calculation rules makes it possible:

1. to handle the address analysis in networks based on established network protocols,
2. to implement network topologies other than ring topologies using switches with more than two ports,
3. to change the topology of the network without having to install new routers and switches, and
4. to update the calculation rules (and thereby the resulting action codes) in connection with dynamic changes in the network (e.g. links not working, routers faulting etc.).

The processing function based on Boolean functions achieves these advantages by:

1. having product terms in the Boolean functional expressions,
2. employing complementary signals, i.e. the inverse signal of an incoming signal, in the product terms,
3. having a non predetermined nature, such that the (Boolean) calculation rules may be re-programmed during operation,
4. having action codes with more than one bit, thereby making it possible to build switches with more than two ports.

The calculation rules are not limited to Boolean functions, but might for example consist of functions using fuzzy logic. Fuzzy logic can be used with additional information such as states of links connected to the switch or router, priority of network addresses etc. Information can be used in calculation rules employed partly with Boolean logic and partly with Fuzzy logic to prioritize the traffic passing through the switch by calculating the action code using e.g. Boolean calculation rule based on the address itself together with Fuzzy Logic rules implementing prioritization function based on network information.

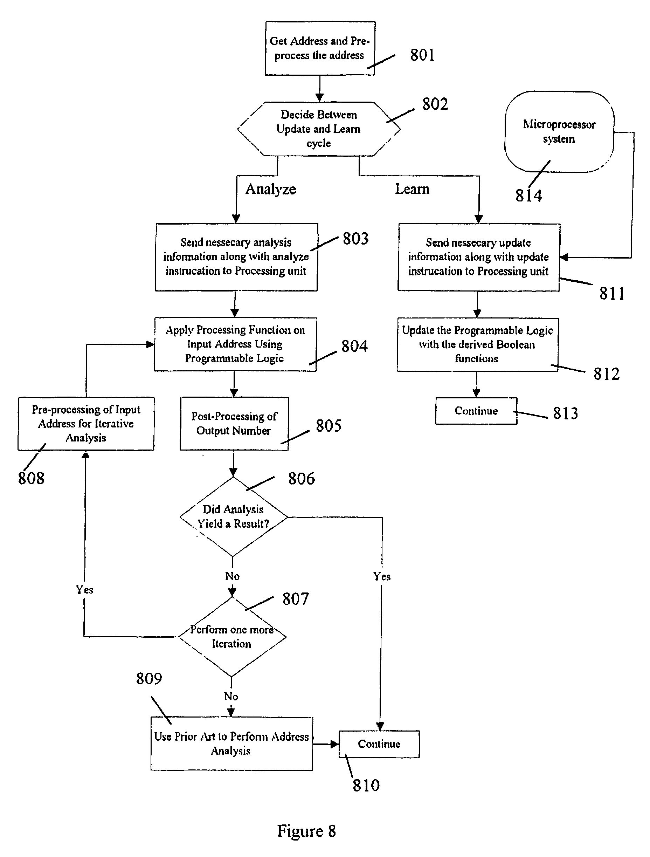

Figure 8 shows a flowchart, which illustrates an example of using a processing function for a network address analysis. The flowchart contains flows for both using and updating the processing function. At the first step the (destination or source) network address of the incoming package is extracted, 801, by the Forwarding Engine, which preprocesses the address, 801, with the intention of possibly changing or coding the address in compliance with the processing function. The preprocessed address will be used for either an analysis (a destination address) or for updating (a source address with information of e.g. the port number from which the package was received) the processing function with a new relationship between a network address and an action number; i.e. a change in the routing table.

This decision is taken in step 802. In the case where an address analysis is needed, the network address and an analyze/calculate instruction is passed, 803, to the processing function, 804, which will try to analyze the network address. The result of the analysis is post-processed, 805, by the FE. The post-processing could be a decoding or other alteration of the result in compliance with the processing function. It is possible that the address analysis cannot be performed if the processing function is not updated with calculation rules that apply to the given network address. The FE will have to validate the result from the address analysis, 806, and based on the result make a decision whether a new address analysis (processing) should be carried out or not. If the address analysis is correct and valid, the flow will end with continue, 810, which indicates that a new cycle can be executed. If the analysis is invalid, a decision, 807, is taken to either re-analyze the network address or use prior art, 809, to perform the address analysis. If a re-analysis is chosen, a new pre-processing procedure, 808, can be executed before the address is re-analyzed, 804. The new pre-processing could be a function changing the network address in such a way that new information is used for the address analysis process.

Figure 8 also illustrates the flow of an update operation. If the FE choose, 802, to update the calculation rules of the processing function, necessary information about the relationship between a network address and an action number is passed, 811, to the processing function. The processing function will derive new calculation rules, 812, and update all calculation rules according to these, by re-programming itself as later described. Finally it will end with continue, 813, which indicates that a new cycle can be initiated. This way, the processing function containing the calculation rules can be updated, without stopping the flow of network information analysis for more than one cycle. The figure also shows, that an external device, 814, such as a microprocessor can be used for updating the calculation rules. The priority between the external device and the FEs for accessing the processing function is freely chosen in the implementation.

As an example of an implementation of the present invention of an improved address analysis method, a technology called programmable logic is employed. A programmable logic element is a digital element that among other things can perform a Boolean function on an input sequence of bits, called an input word or input pattern (see also paragraphs below). The output sequence of bits, called the output word, is the result of applying the given Boolean function to the input word. The Boolean function can be modified dynamically, such that the programmable logic element can be programmed to perform a new Boolean function. The programmable logic element may or may not contain registers for storing results for later use. The values of such registers are called the states of the programmable logic element. The output word may or may not include some or all of the states of the programmable logic element.

Though there exists known techniques to dynamically modify the Boolean functions of the Programmable Logic Device (PLD), current implementations are not suitable for address analysis, since the speed of the modifying/reprogramming techniques for updating the Boolean functions are not sufficient for use in a network address analysis system as described above. Furthermore, the overall calculation speed and capacity (in terms of maximum number of product terms capacity) of existing PLD implementations are too limited to be used with the protocols and speeds of typical common large-scale networks. Details on the implementation improvement are described below.

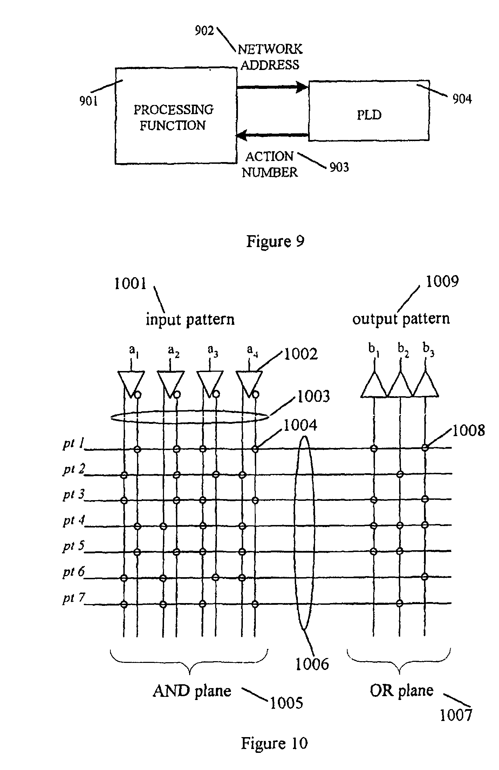

Figure 9 shows how a processing function, 901, can be implemented with a PLD, 904, programmed with a Boolean function to map the binary representation of the network address, 902, numbers to a binary representation of the action number, 903. The processing function, 901, needs to calculate the right action code and uses for this purpose a PLD element, 904, in which a Boolean function is programmed. The Boolean function calculates the correct action number, 903, for a given input network address, 902, sent to the PLD, 904, from the processing function, 901.

By employing such a PLD unit, 904, the processing function, 901, can analyze a network address number at one cycle hardware speeds and can be implemented in a single integrated circuit. (One cycle hardware speeds denotes operations in hardware comprising one or more circuits implementing Boolean function(s) which does not need results from a previous calculation of said Boolean function(s) to yield the final result).

### PLD Architectures using Don't Care and Programmable Prioritization Functions

### Known Solutions

A PLD is an electronic programmable logic device, which can be used for implementing Boolean functions and in some cases the structures also holds registers which can store (some) of the output bits and feed these back into the Boolean function(s). PLD's are found in many implementations ranging from simple systems capable of calculating a few product terms and sums of these terms, to systems holding several specially designed programmable blocks in which small adders, Finite State Machines (FSM) etc. can be programmed/implemented and of which (when these programmable blocks are interconnected by programmable interconnect) relative large digital systems can be build.

These PLD implementations are optimized for specific applications areas simple controllers, smaller digital systems, which can be updated in operation etc. Therefore standard PLD does not offer an optimized solution for implementing processing functions for network address analysis. For larger networks with larger routing tables (and with large network address words) the capacity, organization, processing speed, and re-programming speed of standard PLDs are not suitable for implementing processing functions for network address analysis.

(See e.g. "Principles of CMOS VLSI Design" by N.H. Weste and K. Eshraghian, Addison Westley Publishing Company, 1992, for an introduction to some PLD architectures.)

A common implementation of a PLD is a Programmable Logic Array (PLA) , which in a basic implementation consists of two parts; an AND plane and an OR plane (see e.g. "Principles of CMOS VLSI Design" by N.H. Weste and K. Eshraghian, Addison Westley Publishing Company, 1992). Figure 10 illustrates a common implementation of this. The input pattern, 1001, is applied to input buffers, 1002, which will generate a complementary pattern of the incoming pattern and apply the original and the complementary pattern, 1003, to the AND plane, 1005. The AND plane consists of input wires, 1003, product term wires, 1006, and antifuses, 1004. The antifuses are used to program the AND plane in such a way, that given a specific input pattern, a specific product term, 1006, will be active. Antifuses are a general abstraction of the element used for programming the planes, and exists in various implementations. Basically the name antifuse is used, since the function of the element is to create a connection, by e.g. applying a high voltage to the element. In the figure, an input pattern of $(a_1, a_2, a_3, a_4) = (1,0,0,1)$ will cause product term 2 (pt2) to be activated. The active product term will be used in the OR plane, 1007, by activating the output lines which are connected to the product term by an antifuse, 1008. If product term 2 (pt2) is active, the output pattern, 1009, will be $(b_1, b_2, b_3) = (0,1,0)$, if programmed as in Figure 10. To further emphasize the function of the illustrated PLA, the complete Boolean function for output bit $b_1$ will be written:

$$b_1 = {}^\sim\! a_1 {}^\sim\! a_2 a_3 {}^\sim\! a_4 + a_1 {}^\sim\! a_2 a_3 {}^\sim\! a_4 + {}^\sim\! a_1 a_2 a_3 a_4 + {}^\sim\! a_1 {}^\sim\! a_2 a_3 a_4 \qquad \text{Eq. 8}$$

Depending on the technical implementation of the antifuse, common implementations of PLA structures can be reprogrammed either by first erasing the current programming by the use of e.g. UV-light or high voltage, and then reprogramming the planes.

### Improvements and Resulting Advantages

In a common AND plane implementation, a product term will be activated if, and only if, all of the input pattern matches the antifuse programming. However, by using ternary logic in the AND plane, it is possible to activate a specific product term with more than one input. Implementing ternary logic can (but is not limited to) be implemented by not programming the fuses in a cross between a product term and an input pair. The result of using ternary logic can be illustrated through rewriting Eq. 8, where the antifuse connecting input bit $a_4$ and product term pt2 in Figure 10 is removed:

$$b_1 = {}^\sim\! a_1 {}^\sim\! a_2 a_3 + a_1 {}^\sim\! a_2 a_3 + {}^\sim\! a_1 a_2 a_3 + {}^\sim\! a_1 {}^\sim\! a_2 a_3 \qquad \text{Eq. 9}$$

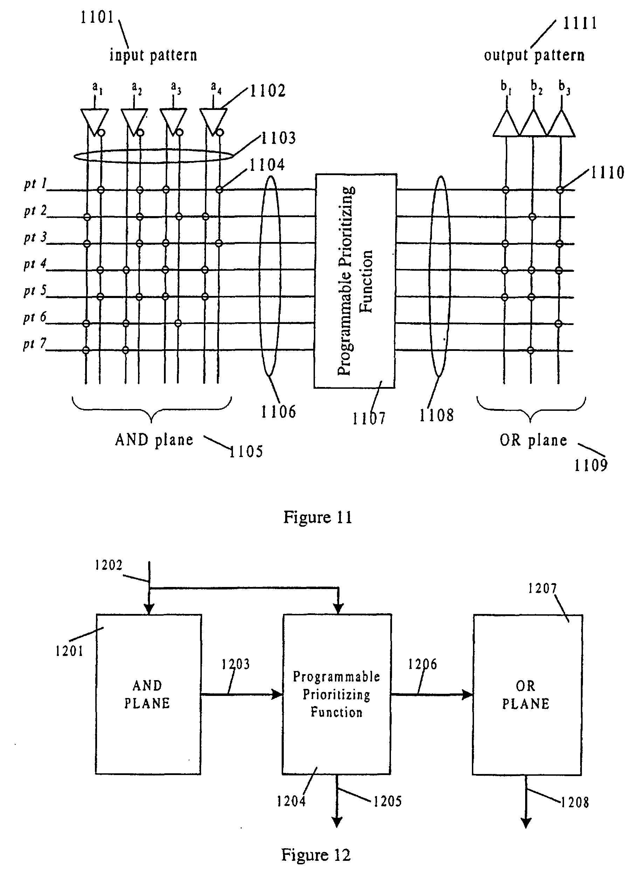

It should be noticed, that $a_4$ is no longer part of the equation which means that both the input patterns $(a_1, a_2, a_3, a_4) = (1,0,0,0)$ and $(a_1, a_2, a_3, a_4) = (1,0,0,1)$ will activate product term 2 (pt2). As an example of the usefulness of this modification, the situation where two network addresses should yield the same action number is used, though the use is not limited hereto. When employing ternary logic in the AND plane, it is likely that a situation where more than one product term is activated. For this situation, the present invention introduces a Programmable Priority Element (PPE) between the AND and OR plane operating on the product terms. This is illustrated in Figure 11, where the PPE is shown, 1107, using the product terms from the AND plane, 1106, as input, and providing an output, 1108, of prioritized product terms to the OR plane. The idea of the PPE is to use a programmed weight assigned to each product term, for selecting one product term among several. The figure also illustrates a situation where it is possible to activate two product terms with the single input pattern $(a_1, a_2, a_3, a_4) = (1,1,0,1)$. This pattern will activate both product terms pt6 and pt7. If product term pt6 were assigned a weight of 3 and product term pt7 a weight of 2, the result would be that only product term pt6 would access the OR plane, thus yielding the output pattern $(b_1, b_2, b_3) = (0,0,1)$.

As an example of use for the present invention described above, said programmable priority element in a PLA can be used for (but not limited to) implementing a longest prefix match analysis in a communication network processing function. In this case, the weight assigned to each product term would be the number of antifuses used in the AND plane for that product term. By using this programming algorithm for the PPE, the match in the AND plane with most information (longest prefix) will reach highest priority.

Some prior art CAM based solutions use a prioritizing function, which uses consecutive weighting of the match lines of the CAM structure. This means that when altering the match entries in the CAM structures in order to adapt a change in the association between network addresses and action numbers, it is likely that more than one match entry have to be reprogrammed since there may be a need to reorganize the match patterns relative positions in the CAM structure. Using the present invention, it is possible to update the Boolean functions by reprogramming a single row of match patterns in the CAM structure and in the associated memory entry, as well as in the prioritizing function. This makes it possible to update all Boolean functions in a single cycle.

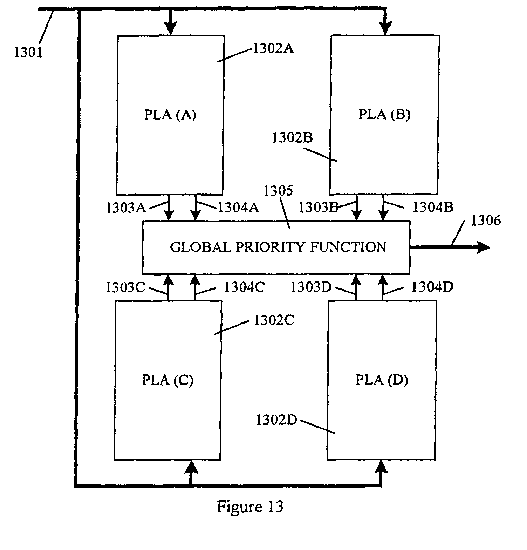

Said priority element can be implemented and organized in a way such that a hierarchical and distributed solution can be build thereby increasing the level of integration achievable. The PLA structure can be used to implement the processing function either with a single PLA structure or with multiple and possibly cascaded PLA structures. Figure 12 illustrates the architecture of an PLA with an AND plane, 1201, a Programmable Priority Element (PPE), 1204, and an OR plane, 1207, where the PPE is implemented in such a way, that it can interact with a Global Priority Function. This architecture is shown in Figure 13 where an arbitrary number of PLA's, 1302A - 1302D, is connected through a Global Priority Function, 1305. Using this architecture, more PLA's can be used to analyze an input pattern, 1301, and thus, effectively implementing larger routing tables. The output pattern of each PLA, 1303A - 1303D, as well as control signals, 1304A - 1304D, indicating a successful analysis, is connected to the Global Priority Function which will prioritize between the output from the successful analysis in all the PLA's, and thus select and provide the correct output pattern, 1306.

**Implementation**

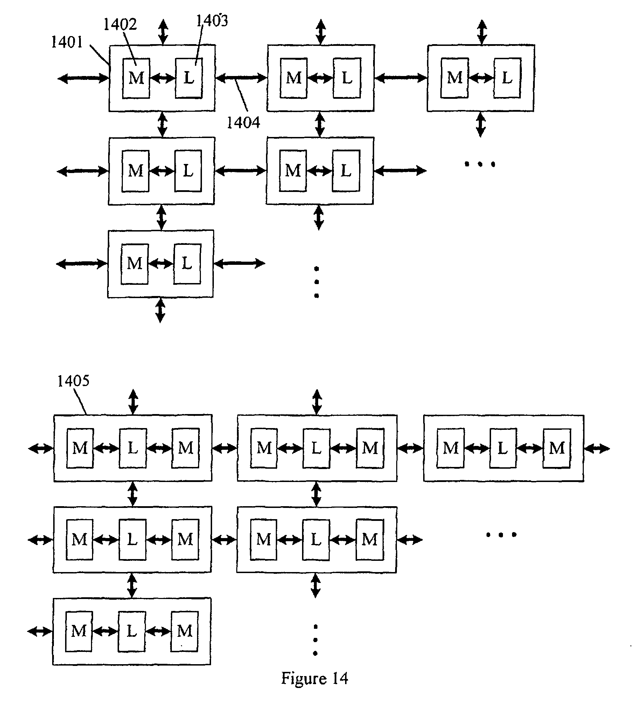

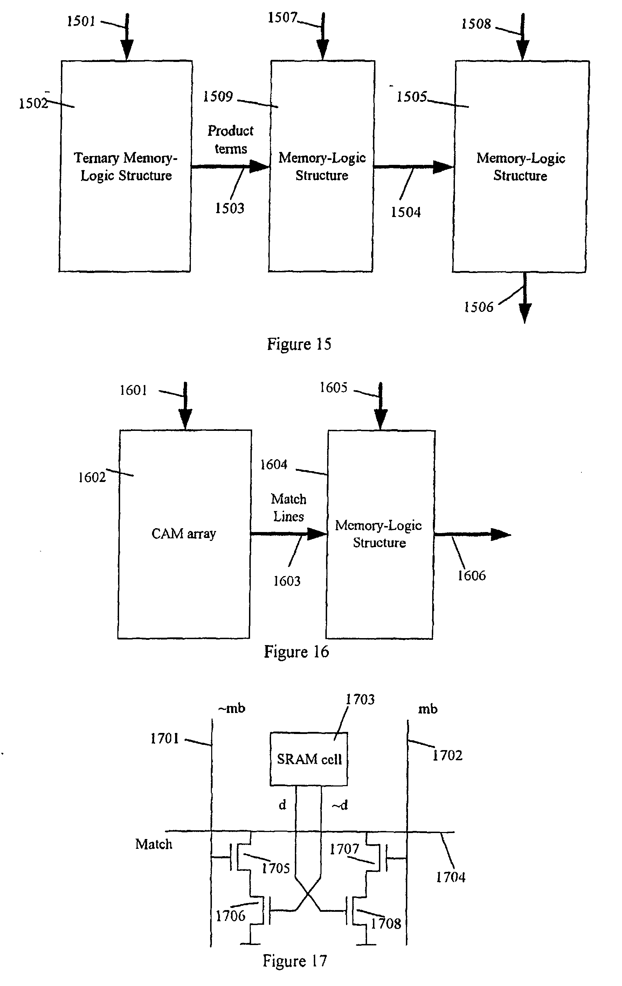

As an example of an implementation of such a PLA device using ternary logic and including a Programmable Priority Element, Figure 14 illustrates an element, 1401, comprising a Memory element, 1402, and a logic element, 1403. The memory element, 1402, could, but is not limited to be implemented as an Static Random Access Memory (SRAM) cell. The logic element, 1403, represents various gate logic, implemented in e.g. CMOS, using e.g. precharge logic. The element, 1401, consisting of a memory element, 1402, and a logic element, 1403, can form an array when connected together, which in the following will be denoted a Memory-Logic Structure (MLS). An extension of the memory-logic element could include an additional memory element, and thus, implement a ternary memory-logic element, 1405, which connected with other such elements could form a Ternary Memory-Logic Structure (TMLS). Now referring to Figure 15, an architecture shows how the above described PLA structure using ternary logic and a programmable prioritizing function can be implemented using said MLS and TMLS. The input pattern, 1501, is applied to the TMLS, 1502, which will allow a pattern recognition and thus, activate 0, 1 or more product terms, 1503, of which at most one is selected by the MLS, 1509, acting as a PPE. The output of the PPE, 1504, is used in another MLS, 1505, for selecting a row of memory-logic elements, which then will use the stored pattern to produce the correct output, 1506. Together this provides an architecture that implements Boolean functions with programmable priority between the product terms.

By using the memory-logic elements, the previously described antifuses are implemented with the flexible memory-logic element, of which the memory cell is easily re-programmable. The PLA can be reprogrammed by selecting one row of the TMLS, 1502, and one row of both MLSs, 1505, 1509, and using the input paths, 1501, 1507, 1508. Programming SRAM memory elements is a commonly known technique. Programming a row of the entire structure, and using programmable prioritization between the product terms ensures, that all the Boolean functions can be updated in one memory write cycle. Furthermore, said architecture could implement a logic to automatically point to the next unused or free row in the TMLS. This would eliminate the need of using external devices for keeping track of the antifuse programming in the PLA, since the network address, the size of the network address and the action number would contain all the information that is needed to modify all the Boolean functions to adapt a change of the association between one network address and one action number in the routing table, said method using only one memory-write cycle to accomplish this.

Said Memory-Logic elements can also be used to implement a ternary CAM using a re-programmable prioritization function to prioritize between multiple matchlines. A CAM is a special memory structure, that when provided with an input pattern, will logically activate a matchline if any of the preprogrammed patterns in the CAM matches the input pattern. Said pattern matching can be extended to use ternary logic, but doing so normally requires some kind of prioritizing between the match lines, as more than one can be active as, similar to the PLA product terms explained above. Prior art uses a hardwired prioritizing, that prioritizes product terms with higher numbers before product terms with lower numbers - or vise versa. The present invention introduces a Programmable Prioritizing Element (PPE) to extend the functionality of such a ternary CAM. This is illustrated in Figure 16, where a common CAM array 1602, is used to recognize an input pattern, 1601, using ternary logic. The Matchlines, 1603, of which more than one can be active, are prioritized using a MLS, 1604, which can be programmed. The output of the PPE, 1606, can then be used as a prioritized match indication.

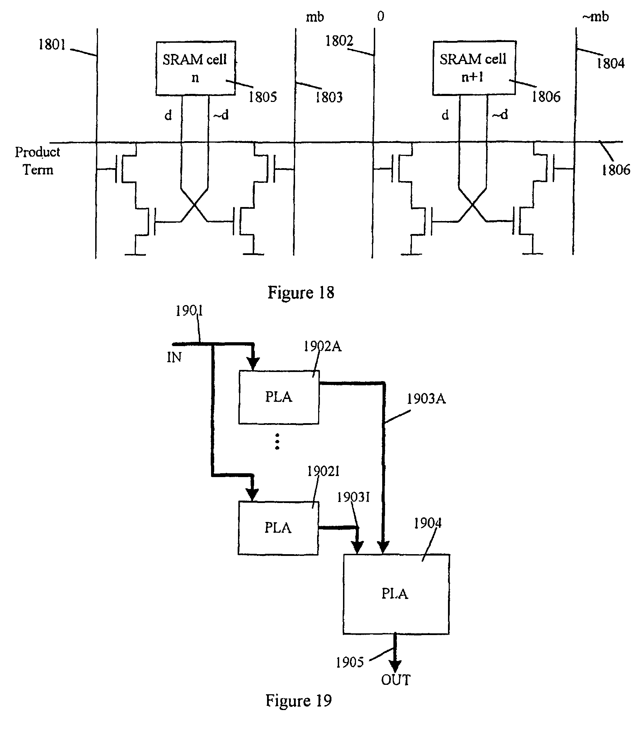

As an example of the logic needed to implement said antifuse by using a memory-logic element, Figure 17 illustrates such an arrangement. The input pattern (one bit and its complementary in the figure) is applied, 1701, 1702, to the logic, which consists of 4 transistors. The product term, 1704, should be either pre-charged or pulled-up to a logical high value before the input pattern is applied; pre-charging being a commonly known technique. When applying the input pattern (mb, ~mb) = (1,0), the transistors 1705 and 1706 will both be open, if the content of the SRAM cell is 0 (d, ~d) = (0,1). This results in a discharge of the product term, as the transistors, 1705, 1706, will open a path to ground. Inverting both the input and the content of the SRAM cell will yield the same result, since the other transistors, 1707, 1708, will open a path to ground. Thus, if the content of the SRAM, and the input bit mb is not of same logical value, the product term will be discharged. Using this memory-logic element in a row, the product term will be evaluated low if a single element has a mismatch between the input bit and the SRAM content. However, if, and only if, all input bits of an entire input pattern matches all the corresponding SRAM cell contents, the product term will remain of high logical value, and will thus represent an active product term.

The present invention also defines another use of the MLS to generate a hybrid between a normal matching MLS and a ternary matching MLS, which can be used for both binary and ternary logic matching. This can be accomplished, by using two memory-logic cells together, and by controlling the input pattern. Figure 18 illustrates such two memory-logic elements, which can be recognized from the description of implementing an antifuse. It should be observed, that the logic configuration is not changed, and therefore it can be used to implement two antifuses, and thus, match a 2-bit pattern. However, by applying logical low to the inputs 1801, 1802, and applying one bit of an input pattern to 1803, and its complementary to 1804, the structure of two memory logic elements can implement a ternary antifuse or CAM element. The following table will illustrate this:

Table 2

| SRAM n (1805) | SRAM n+1 (1806) | mb (1803) | ~mb (1804) | Product Term (1807) | Comment: |
|---|---|---|---|---|---|
| 0 | 0 | X | x | 1 | Dont care |
| 0 | 1 | 1 | 0 | 1 | Match |
| 1 | 0 | 1 | 0 | 0 | No match |

This means that the drivers applying the input pattern can decide whether two adjacent memory-logic element should be used for 2-bit normal matching, or 1-bit ternary matching.

It is possible to implement several sets of calculation rules (e.g. for the implementation of address analysis of several different network protocols) in the PLA structure by adding extra signals to the product terms. For this feature a protocol number is defined such that the number (and its binary representation) is chosen for each protocol of which a network address analysis function is to be analyzed in the PLA structure. The product terms, $pt$, in the AND plane are expanded so that they consists of one part, $pt_{analysis}$, representing the product term of the calculation rule and one part, $pt_{protocol}$, representing the protocol. As an example consider a product term of four address bits ($a_1$, , $a_4$) and two protocol bits ($p_1, p_2$) where the product term is expressed as:

$$pt = pt_{analysis} \ pt_{protocol} = (\tilde{\ } a_1 \ a_2 \ \tilde{\ } a_4)(p_1 \ \tilde{\ } p_2) \qquad \text{Eq. 10}$$

This product term is evaluated 1 if the address analysis based on the input ($a_1$, , $a_4$) = (0,1,x,0) is true and if the protocol selection code is ($p_1, p_2$) = (1,0). This way several protocols can be analyzed using the same PLA structure. (The priority function described below may be employed to priorities between the product terms in a calculation rule). In addition the PLA structure may be set up such that some protocols employ Tenary logic, and some do not, using e. g. the methods described above employing MLS and/or TMLS structures.

An extension of the implementation of the address analysis method described in the present invention employs several PLA structures, shown in Figure 19, 1902A-1902I, which calculates sub-expressions, 1903A-1903I, which is used by a PLA structure, 1904, to calculate the resulting action number, 1905, thereby minimizing the need amount of circuitry to implement a given Boolean function for the address analysis task.

To describe an example of the Logic that could be used in the MLS used for the Programmable Prioritizing Element, some mathematical equations are derived. For some prefix configurations in some routers the different Boolean functions may cover the same sub-set of Boolean expressions, e.g. the two functions $f_1(a_1,a_2,a_3)$ and $f_2(a_1, a_2,a_3)$ expressed as:

$$f_1(a_1,a_2,a_3) = a_1 \ \tilde{\ } a_2 + a_1 a_2 \ \tilde{\ } a_3$$

$$f_2(a_1,a_2,a_3) = \tilde{\ } a_1 \ \tilde{\ } a_2 \ \tilde{\ } a_3 + a_1 \ \tilde{\ } a_2 \ \tilde{\ } a_3 \qquad \text{Eq. 11}$$

Will both be evaluated TRUE or 1 if the input pattern is:

$$(a_1, a_2, a_3) = (1, 0, 0) \qquad \text{Eq. 12}$$

In the Internet only the match with the longest prefix must be selected and hence a way to prioritize the action numbers must be implemented. One implementation example selects the right action code depending on the result of the other codes. Using the example of Eq. 4 and assuming that the function $f_1(a_1, a_2, a_3)$ has lower priority than $f_2(a_1, a_2, a_3)$ the functions may be calculated as:

$$f_1(a_1, a_2, a_3) = (a_1 \tilde{\ } a_2 + a_1 a_2 \tilde{\ } a_3) \tilde{\ } f_2(a_1, a_2, a_3)$$

$$f_2(a_1, a_2, a_3) = \tilde{\ } a_1 \tilde{\ } a_2 \tilde{\ } a_3 + a_1 \tilde{\ } a_2 \tilde{\ } a_3 \qquad \text{Eq. 13}$$

In another implementation the prioritizing is done on the product term level, e.g. the two product terms $a_1 \tilde{\ } a_2$ and $a_1 \tilde{\ } a_2 \tilde{\ } a_3$ are prioritized. This can be done either by expanding the product terms or by introducing a prioritizing function.

In the example of Eq. 4 and using the assumption that $a_1 \tilde{\ } a_2$ has a lower priority than $a_1 \tilde{\ } a_2 \tilde{\ } a_3$ the two functions could be expanded into:

$$f_1(a_1, a_2, a_3) = a_1 \tilde{\ } a_2 a_3 + a_1 a_2 \tilde{\ } a_3$$

$$f_2(a_1, a_2, a_3) = \tilde{\ } a_1 \tilde{\ } a_2 \tilde{\ } a_3 + a_1 \tilde{\ } a_2 \tilde{\ } a_3 \qquad \text{Eg. 14}$$

This would give $a_1 \tilde{\ } a_2$ a lower priority than $a_1 \tilde{\ } a_2 \tilde{\ } a_3$ for the input $(a_1, a_2, a_3) = (1, 0, 0)$.

In cases where the number of product terms that are prioritized is of a significant size the expansion could result in a large number of new product terms. In this case it may be advantageous to employ a prioritizing function.

A prioritizing function can be multiplied (logical AND) to each of the product terms that must be prioritized. Considering the example of Eq. 4 using the assumption that $a_1 \tilde{\ } a_2$ has a higher priority than $a_1 \tilde{\ } a_2 \tilde{\ } a_3$ would lead to:

$$f_1(a_1, a_2, a_3) = a_1 \tilde{\ } a_2 \, p_1(a_1, a_2, a_3) + a_1 a_2 \tilde{\ } a_3$$

$$f_2(a_1, a_2, a_3) = \tilde{\ } a_1 \tilde{\ } a_2 \tilde{\ } a_3 \, p_2(a_1, a_2, a_3) + a_1 \tilde{\ } a_2 a_3 \qquad \text{Eq .15}$$

Here $p_1(a_1, a_2, a_3)$ and $p_2(a_1, a_2, a_3)$ are two prioritizing functions. The calculation (1 or 0) of each prioritizing function can be performed in several ways. As an example the following implementation is considered.

For each of the prioritizing functions $p_1(a_1, a_2, a_3)$ and $p_2(a_1, a_2, a_3)$ a prioritization number is selected such that the number of $p_1(a_1, a_2, a_3)$ is greater than the number of $p_2(a_1, a_2, a_3)$. A simple function can then compare the two priority codes and determine which product term to grant priority. The priority number or priority code associated with each product term can be found in the routing table of the router or switch (see also the discussion and routing table in previous section).

As an example of implementing a logic to compare two binary integers, the following will describe the mathematical equations needed.

The priority number can be represented on binary form and used in a programmable priority function. As an example consider a priority coding scheme where a priority code is associated with each product term in the Boolean expression(s) (this priority number or code is found directly from the routing table). The present example employs a coding method where the production term (that are evaluated to 1) with the highest priority value gains priority of other product terms (evaluated to 1). For each bit starting with the most significant bit the calculation of each of the priority functions $p_i(a_1, ... a_n)$ can be done in an iterative process.

To perform the calculation a set of helping priority functions $hp_i$ is used. The helping functions are calculated for each bit, $i$, in the priority codes. The helping function is associated with a given product term, and may be implemented with a MLS. The helping function of the most significant bit, bit $n$, is calculated as:

$$hp_n = m(a_1,a_2,a_3)\,(d_n + \tilde{\,}d_n\,AZ_n) \qquad\qquad \text{Eq. 16}$$

Here the product term used as input to this particular priority function is denoted $m(a_1,a_2,a_3)$, the $n$th bit of the priority code of this particular product term is denoted $d_n$, and the variable $AZ_n$ (All Zero) is TRUE or 1 when and only when all of the priority code bit and the product term at the $n$th position is zero or 0, i.e.:

$$AZ_n = \Pi\ (\sim d_n + \sim m(a_1,a_2,a_3))_i$$

$$i \qquad\qquad \text{Eq. 17}$$

Here the index $i$ indicates that the multiplication (logical AND) is done with all of the priority code bits (at the $n$th position) .

The following help priority functions (for each of the bits in the priority code) is calculated as:

$$hp_j = hp_{j+1}\,(d_j + \sim d_j\,AZ_j)$$

$$AZ_j = \Pi\ (\sim d_j + \sim hp_{j+1})_i$$

$$i \qquad\qquad \text{Eq .18}$$

The help priority function $hp_0$ of the least significant bit of the priority code can then be used as the resulting priority function $p(a_1,a_2,a_3)$:

$$p(a_1,a_2,a_3) = hp_0 \qquad\qquad \text{Eq. 19}$$

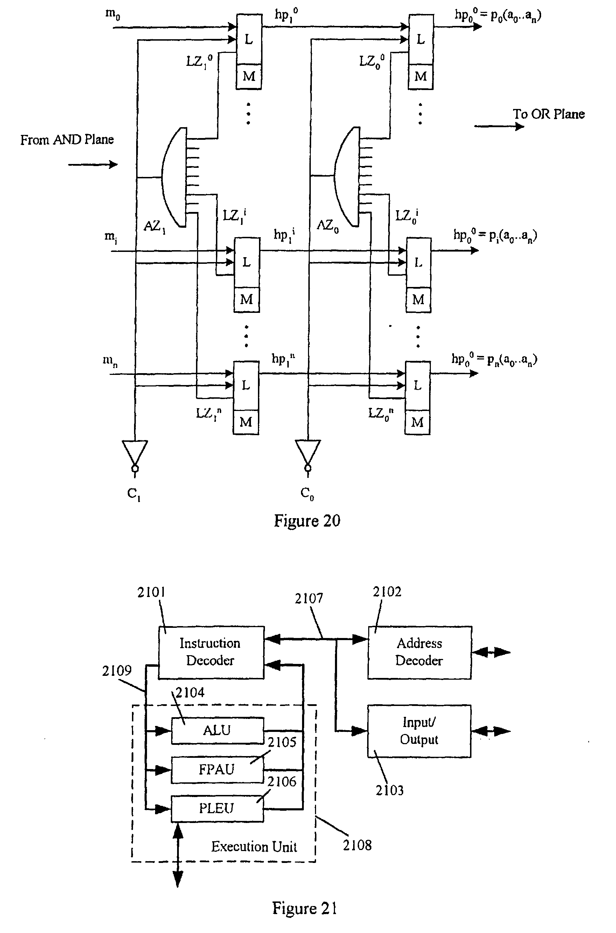

As an example consider Figure 20 where an implementation of a priority function employing MLS elements for a two bit priority code is shown. The product terms $m_0$, $m_i$, and $m_n$ (note that for reason of simplicity only these three product terms are shown in the figure) calculated in the AND-Plane are forwarded to the first level of the prioritization function (column 1). In the first level (representing the most significant bit of the priority code) of the prioritization function the All Zero or $AZ_1$ signal is calculated based on the Local Zero, $LZ^{0..n}_1$, i.e. signals calculated in each of the MLS elements in column 1 (see description of this signal below). The AZ signal is feed back in to the MLS element and used to calculate each of the local helping function $hp^{0..n}1$ of column 1. The helping functions $hp^{0..n}1$ are forwarded to the next level (representing the second most - and in this case the least significant - bit of the priority code) where a new $AZ_0$ signal is calculated and a new set of helping functions $hp^{0..n}0$ are calculated. The last set of helping functions, $hp_0$, is used as the value of each of the priority functions $p_0$, $p_i$, and $p_n$ which are forwarded to the OR-Plane. As can be seen from the figure the resulting priority code $(C_1,C_0)$ is calculated based on the $AZ_{1..0}$ signals.

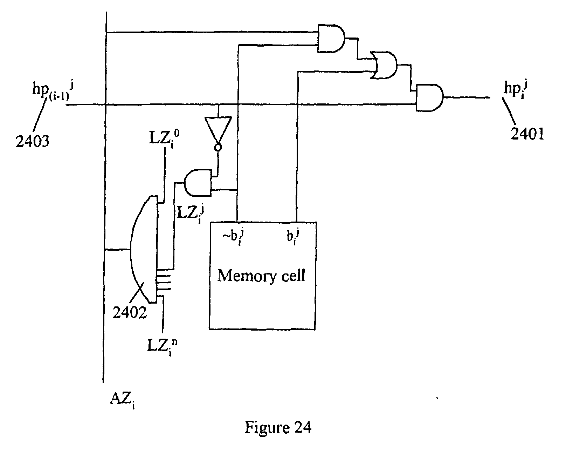

A more detailed example of the logic of the MLS element of the j'th product term in the i'th column is shown in Figure 24. The circuit of the logic part of said MLS implements the calculation of the helping function, $hp^j_i$, 2401, based on the value of the incoming help function signal $hp^j_{i-1}$, 2403. The All Zero, $AZ_i$, signal for the i'th column of MLS elements may be calculated as the product (logical AND) of all the Local Zero, $LZ^{0..n}_i$, signals of each of the MLS elements in the column. The global AND gate, 2402, may be implemented in a distributed way such that a small part of the AND circuit is implemented in each of the MLS elements in the i'th column.

This method can also be used in a distributed priority function implementation where the results (e.g. the action codes) of several PLA structures are prioritized. For each group of product terms (e.g. for each PLA structure) of which the described priority function is calculated the resulting priority code $c_0$, , $c_n$ can also be calculated as indicated in Figure 20. For each bit, $i$, in the priority code the resulting bit can be calculated as:

$$c_i = \sum_j (hp_i \; cl_i)_j = \; \sim AZ_i$$

$$\text{Eq. 20}$$

Here the index $j$ indicates that the summation (logical OR) is with all of the priority codes of the different product terms. This resulting priority code is calculated for each group of product terms (e.g. a PLA structure) and is associated with the result from the OR-Plane (the action code of each PLA structure).

The above mentioned priority function can be used to prioritize between sets of bits (e.g. action codes) instead of a single bit (e.g. the result of a product term). By using this an additional hierarchy of priority functions can be added to find the resulting action code from a set of results/action codes and their resulting priority codes (se also the discussions in previous paragraph on a Global priority function).

The described method of priority function implementation can be modified to accommodate other coding schemes of the priority code (e.g. lowest value has the highest priority)

Again another priority function can be implemented by forming a so-called hardwire priority function in the circuit structure. In this structure the physical position of the product term in the programmable logic structure determines the priority of the product term. It is then up to the user who programs the programmable logic device to see to it that the product terms gets the right priority by programming the product terms in the proper positions.

### *Minimization Techniques for Reducing Calculation Functions in Address Analysis*

### Systems where Boolean Minimization will Reduce Calculation Rules

The present invention also describes methods used for minimization of the set of product terms in a calculation rule employing Boolean function(s) under the constrains of a longest prefix match address analysis by a simple ordering of the set of product terms and by the employment of known minimization techniques. Other methods using known Boolean minimization techniques are also shown.

The communication network switch is an example of a system where objects are arriving from different paths to a common cross-point, from which they will be transmitted to other paths according to information that describes the relation between an object and its transmission path. A system of this type, with the additional requirements that each object can be recognized by a binary label, to which a Boolean function can be applied in order to retrieve the information that describes the transmission path, is an object of the present invention and is described in this section. The following text will describe how a minimization technique can be applied to the calculation rules to reduce these under certain circumstances. The example is based on a network switch, but could be applied to similar systems.

Since the input address number is relative large compared to the output action number (see e.g. the example in Figure 6), there is a large degree of redundancy in the input information that may be discharged in the calculations thereby minimizing the number of product terms needed to be calculated.

As described previously a (set of) Boolean function(s) can be constructed that performs the calculation of the output action number (one or several bits) based on the input network address to be analyzed (on binary form).

As an example consider a network where the network prefixes are 3 bits long where the three bits are denoted $a_1, a_2, a_3$. A given action, e.g. a route through the router, is selected, or one of the bits in the action code is calculated/set, when the function $f(a_1, a_2, a_3)$ is evaluated to 1 (true). The function $f(a_1, a_2, a_3)$ is specified as a Boolean function of the three input bits, which holds the prefix information, i.e. a function which becomes 1 if one of the bitpatterns are encountered in the input network address at the given prefix bit positions. As an example the function is defined to recognize five different bitpatterns:

$$f(a_1, a_2, a_3) = a_1\,\tilde{}\,a_2\,\tilde{}\,a_3 + \tilde{}\,a_1\,\tilde{}\,a_2\,\tilde{}\,a_3 + a_1\,\tilde{}\,a_2 a_3 + a_1 a_2\,\tilde{}\,a_3$$

$$+ \; a_1 a_2 a_3 \qquad\qquad \text{Eq. 21}$$

Here, as before, multiplication denotes the logical AND function and summation denotes the logical OR function. The mark, ~, implies that the inverse function should be applied to the signal, i.e. a 1 becomes 0 and 0 becomes 1.

Eq. 21 may be minimized and will in this case result in this simpler representation of $f(a_1,a_2,a_3)$:

$$f(a_1,a_2,a_3) = a_1 + {}^\sim a_2\, {}^\sim a_3 \qquad \text{Eq. 22}$$

The function may also be calculated using the functions $g_1(a_1,a_2,a_3)$ and $g_2(a_1,a_2,a_3)$, which calculates sub-expressions of Eq. 21:

$$g_1(a_1,a_2,a_3) = g_1 = {}^\sim a_2\, {}^\sim a_3$$

$$g_2(a_1,a_2,a_3) = g_2 = a_1 a_2$$

$$f(a_1,a_2,a_3) = a_1 g_1 + {}^\sim a_1 g_1 + a_1\, {}^\sim a_2 a_3 + g_2\, {}^\sim a_3 + g_2 a_3 \qquad \text{Eq. 23}$$

Using these sub-functions $g_1(a_1,a_2,a_3)$ and $g_2(a_1,a_2,a_3)$ the function $f(a_1,a_2,a_3)$ can be minimized and the total number of product terms may be held constant, which may be advantageous when updating the Boolean function. Such a set of sub functions can be employed in a two step solution a first PLA structure calculating all of the sub functions based on the input network address and a second PLA structure calculating the action number as a sum-of-product function of the set of sub functions. For some systems this would minimize the total chip area of the address analysis function by pre-calculating some common patterns, and using these in said second PLA structure.

As can be seen the employment of the Boolean function may be simplified using common minimization techniques (see e.g. R.K. Brayton, G.D. Hachtel and A.L. Sangiovanni-Vincentelli, Multilevel Logic Synthesis, Proceedings of IEEE, vol. 78, no. 2, pages 264-300, February 1990 or Synthesis and Optimization of Digital Circuits, McGraw-Hill Series in Electrical and Computer Engineering, by Giovanni De Micheli, and Giovanni Demicheli, March 1994), resulting in a smaller yet adequate representation of the processing function. (As mentioned the input information may contain a lot of redundant information, which this way is discharged.)

When programming PLA structure(s) Boolean minimization techniques as described in e.g. Synthesis and Optimization of Digital Circuits, McGraw-Hill Series in Electrical and Computer Engineering, by Giovanni De Micheli, and Giovanni Demicheli, March 1994, and programs such as Espresso from Berkeley University, California, can be used in order to minimize the number of product terms needed in the PLA Structure(s).

For networks using a longest prefix matching address analysis scheme employing a prioritization function, standard minimization methods does not work. The present invention uses a method comprising the following steps:

    1. The routing table is sorted according to the priority number
    2. For each sub-set, A, of entries in the routing table with the same priority number the corresponding Boolean calculation rules, R, is set up in the form of sum-of-product
    3. The calculation rules, R, are minimized using e.g. Espresso, or a similar approach, resulting in a minimized set of calculation rules R in the form of sum-of-products
    4. The minimized set of calculation rules, R, is associated with the corresponding priority number/code of sub-set A.
    5. The PLD is updated with the minimized set of calculation rules, R, using the associated priority number/code (see previous paragraphs)
    6. Step 2-5 is repeated for all combinations in the routing table of priority numbers and action numbers

**[0179]** By using this or a similar method the calculation rules employing prioritization functions is not corrupted since the set of product terms being minimized all have the same priority.

The minimization technique described above can also be used on a structure of several PLA Structures in a distributed configuration as shown in Figure 19 (see also the previous section describing this matter).

The minimization method described here can also be used in tenary CAM systems where a priority function is employed. For CAM systems the resulting product terms of the minimized Boolean functions, R, would be converted into tenary match patterns using standard techniques for such and the associated priority code or R would be used to update the CAM system.

***Microprocessor with Programmable Logic Array Execution Unit***

**Microprocessor Architecture Description**

Part of the present invention relates to a microprocessor system executing software programs in which a large number of bit field analyses are performed. A bit field analysis is similar to the network address analysis previously described in the application. Figure 7 shows a situation where *n* bits are analyzed, and where *m* bits is the result. This can be used to both improve the execution speed of ordinary software, but also software dedicated to bit field analysis. An example of the latter could be the network address analysis mentioned in the previous sections. A following section will provide more examples of use.

A microprocessor system comprises a microprocessor and additional elements such as, but not limited to: Random Access Memory (RAM), permanent storage elements and control for these (e.g. disk drives, tape drives, etc.), display elements and control for these (e.g. a monitor, an LCD display, etc.), input elements and control for these (e. g. keyboard, mouse, etc.) and other input/output and communication devices. The microprocessor is able to read and write data and basic microprocessor instructions from and to these elements. In the following these data and basic microprocessor instructions will be denoted program information.

The microprocessor executes basic microprocessor instructions such as but not limited to: Add two numbers, subtract two numbers, compare two numbers, move information in memory, jump, conditional jump, etc. A sequence of basic microprocessor instructions can thus manipulate data, and this process is denoted a software program.

Figure 21 is used to illustrate a standard microprocessor architecture. During normal operation, the microprocessor will use the address decoder, 2102, to point out an address in an external RAM (not shown), of where the next instruction or program information to be executed is placed. The instruction is fetched through the input/output unit, 2103, and sent to the instruction decoder, 2101, which will analyze the program instruction and set up the necessary paths and control signals, 2107, in the microprocessor. Basically instructions will require the input/output unit, 2103, for communication with external devices, the execution unit, 2108, for calculations and similar operations, or might only be subject to change of states and registers in the instruction decoder, 2101, if it does not operate directly on the data. The execution unit is used to perform operations like add, subtract, compare etc. This is done in an Arithmetic Logical Unit (ALU), 2104. Additionally some microprocessors include a Floating Point Arithmetic Unit (FPAU), 2105, to include multiply, division and other more advanced calculation functions in order to speed up such operations. In a normal operation, the instruction is decoded by the instruction decoder, 2101, which then executes a small program of microcode to accomplish the operation of that instruction. In some microprocessors it is possible to alter the microcode in the instruction decoder, 2101, in order to change or add functionality to the microprocessor. It should be noted that the Programmable Logic Execution Unit (PLEU), 2106, shown in the figure is not part of a common microprocessor, but is part of the present invention.

An ALU is an element that takes one or two operands and performs a pre-selected function with the operand (s) as inputs. Some basic functions found in most ALUs today is integer addition, integer subtraction, binary logical operations such as binary AND, OR, XOR and rotation of the bits of one of the operands.

A binary logical operation is a logical operation performed between each of the bits in the two operands. As an example consider the 2nd bit in the two input operands and assume that these holds the binary values of 1 and 0, respectively, and that a binary OR should be performed. The 2nd bit of the resulting output word will then be 1 since logically (1 OR 0) is 1.

In a rotation of bits the input word will be rotated a certain number of bit positions either to the right or to the left. As an example consider the binary input word 10011 and assume that this word is to be rotated two positions to the left. The resulting output word will in this case become 01110.

In some cases the microprocessor may contain several ALUs and may in addition also contain FPAUs. A FPAU typically implements such functions as floating point multiplication and division.

A typical basic microprocessor instruction will be executed in the following steps:

1. The basic microprocessor instruction is read (e.g. from memory), and the input/output element, 2103, passes the instruction code to the instruction decoding element, 2101.
2. The instruction decoding element, 2101, analyzes the basic microprocessor instruction code and based on this analysis sends out control signals, 2107, 2109, to the other elements of the microprocessor, 2102, 2103, 2108, specifying the action needed to execute the basic microprocessor instruction.
3. The actions which are needed to execute the given basic microprocessor instruction are carried out. This could be such actions as: The addition of two numbers by the ALU, 2104, a comparison of two numbers by the ALU, 2104, the calculation of the next address to read program information from (performed by the address calculation element, 2102), reading or storing data through the input/output element, 2103, etc. (In order to execute a basic microprocessor instruction several of these actions may bee needed.)

The microprocessor shown in Figure 21 is, as mentioned, a minimal configuration of a microprocessor - the minimal set of functional blocks needed to integrate the functionality of a simple microprocessor. Most microprocessors of today contains several extra elements, each included in the microprocessor architecture with the purpose of improving the performance of the whole microprocessor system. Such extra elements may be e.g. internal registers, input/ output cache, direct interface to different elements of the microprocessor system, internal memory - both Read Only Memory (ROM) and RAM, etc. In addition some microprocessors uses a sequential approach of the execution of the basic microprocessor instructions, while others uses a pipelined approach or a combination of the two.

**Problems with Prior Art**

A bit field analysis in a software program is typically implemented with a relative large sequence of basic microprocessor instructions. In a software program where a bit field analysis or several bit field analyses are used in an iterative way by the execution of a sequence of basic microprocessor instructions, the delay caused by this iterative operation may become significant and thereby limit the performance of the system.

The bit field analysis task can be specified as a function of an input sequence of bits resulting in an output sequence of bits used by the given software routine for the following data processing. The output sequence of bits could contain such information as the next state in a Finite State Machine (FSM), a new (binary) value for a variable, a binary code representing the action to perform, a flag for further use by the software program in the case of a match of a bit pattern, etc. Indexing and using arrays and tables used in software could be speeded up, and specific functions such as analyzing a network address could be executed by a bit field analysis.

Prior art (e.g. WO 94/09416, "High Speed Programmable Logic Controller") uses a microprocessor or microcontroller in which a sub set of the instruction set consists of instructions capable of handling predefined (simple) Boolean functions on the input word(s). Typical instructions found in said microprocessors or microcontrollers are binary AND and binary OR functions where the bits of two input words, $a_0,..,a_n$ and $b_0,..,b_n$ are used to calculate the output word $q_0,,q_n$ as $q_i = a_i \cdot b_i$ and $q_i = a_i + b_i$ respectively. Such instructions are used together with other instructions such as SHIFT instructions (which shifts the input sequence of bits right or left a certain number of positions) to perform bit field analysis through a sequence of instructions in an iterative way. Such solutions are said to be programmable - here they will be denoted Iterative Programmable Solutions. The drawback of these solutions is the need for multiple instructions and the delay caused by these, a delay that may be critical for an applications performance.

As an implementation of a bit field analysis function a Boolean function can be set up which specifies the logical operation needed to generate the output sequence of bits based on the input sequence of bits. This operation can hence perform a given bit field analysis. The delay of a bit field analysis can be minimized by the employment of a technology called programmable logic, which is a digital element that can perform a pre-programmed Boolean function on an input sequence of bits, called an input word. The output sequence of bits, called the output word, is the result of applying the given Boolean function to the input word. The Boolean function can be modified dynamically, so that the programmable logic element, can be reprogrammed to perform a new Boolean function. The programmable logic element may or may not contain registers for storing results for later use (these values may e.g. be used to represent states in a FSM). The values of these registers are called the states of the programmable logic element. The output word may or may not include some or all of the states of the programmable logic element.

This solution is also said to be programmable, but the programmability does here consist in the possibility to change the bit field analysis by reprogramming the programmable logic element such that a new Boolean function can be performed by said element. This type of programmability will be denoted Boolean Function Programmability since the Boolean function may be reprogrammed (as opposed to the Iterative Programmable Solutions).

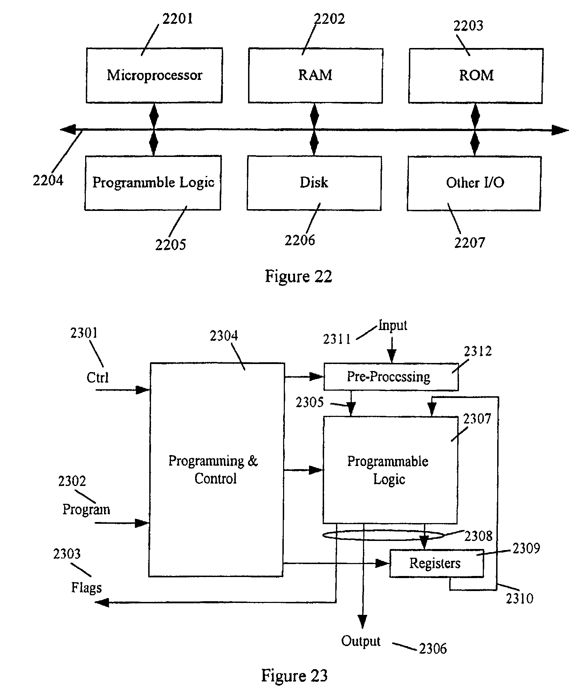

Such a programmable logic element is today commercially available as a separate electronic device. Microprocessor systems may use such a programmable logic device as an additional component. The microprocessor is thereby able to communicate with the programmable logic device, sending input words, receiving output words, and fully or partly control the programming of the devices. Figure 22 shows a block diagram of an example of a microprocessor system, which employs a single programmable logic element. In this example the microprocessor, 2201, controls the actions performed by the rest of the elements of the microprocessor system, 2202-2207. The memory consists of RAM, 2202, and ROM, 2203, elements. A permanent storage device is shown as element 2206. Communication with other equipment and with the user is done through the input/output element, 2207. The programmable logic element, 2205, is connected to the data bus, 2204, like the rest of the elements, 2201, 2202, 2203, 2206, 2207, of the microprocessor system.

The drawback of such a solution is the time used to transmit data to and from the programmable device(s) and the fact that current microprocessors are working at a speed significantly above that of programmable logical devices, thereby increasing the relative latency of the operation. In addition the results from the programmable logic device cannot directly be used as an integral part in the instruction set for conditional branches etc.

For some applications in which the bit field analyses must be executed within a specified amount of time (e.

g. for some real-time systems), this delay may be too large. Another limitation of using external PLDs in a microprocessor system is that more instructions are needed to communicate with an external device.

To summarize the drawbacks of such a solution:

1. The delay caused by sending data forth and back on the data bus, 2204,
2. 2) the possible need for additional logic components in order to connect the programmable logic element, 2205, to the data bus,
3. 3) the typical speed difference between the microprocessor, 2201, and the programmable logic element, 2205, resulting in a number of so called wait states of the microprocessor, 2201, and
4. 4) the lack of integration of the results from the PLD with the rest of the instruction set such that e.g. conditional branches can be directly performed based on flags from the programmable logic element.

**Addition of an Execution Unit based on Programmable Logic for Implementing Boolean Functions**

An execution unit according to the present invention achieves the advantages of using a programmable logic structure in the microprocessor by integrating a PLD, 2205, into the microprocessor as an additional execution unit i. e. a Programmable Logic Execution Unit (PLEU), 2106.

An implementation example according to the present invention employs a programmable logic element, 2205, in an execution unit, 2108, forming a Programmable Logic Execution Unit (PLEU), 2106. Figure 23 illustrates the behavior obtained from this. The programmable logic element, 2307, performs the - for the bit field analysis - specified Boolean function on the input word, which comprises a pre-processed, 2305, version of the input operand(s) 2311, and the states, 2310, of the programmable logic execution unit. Some of the bits of the output word, 2308, of the programmable logic element may be latched, 2309, for use as the states in the programmable logic execution unit, and some of the output bits may be used as flags, 2303, in the microprocessor. The rest of the bits of the output word, 2308, is used as the output, 2306, of the programmable logic execution unit.

The programmable logic element, 2307, may be reprogrammed either by basic microprocessor instructions decoded by the instruction decoder, 2101, or directly from the outside through the input/output interface, 2103, of the microprocessor.

The present invention integrates the programmable logic element, 2205, into the microprocessor, 2201, as an execution unit, 2106, in order to improve the performance of the microprocessor system in software programs where a large number of bit field analyses limits the performance of the program. The present innovation is not dependent on the complexity of the implementation of the microprocessor, 2201, but is only dependent on the possibility of implementing and integrating a new execution unit, 2106, - a Programmable Logic Execution Unit - into a given microprocessor, 2201. The programmable logic execution unit is integrated into the microprocessor as another execution unit, 2106, would have been, receiving the same kind of inputs (e.g. one or two operands) delivering the same kind of outputs (e.g. an output word, flags, etc.). The microprocessors instruction set is increased to accommodate the new functionality of a new execution unit, 2106. Hence the bit field analysis may be executed by one basic microprocessor instruction.

By integrating the programmable logic into the microprocessor, 2201, as an execution unit, 2106, the delay caused by sending data back and forth on the data bus, 2204, is avoided. In addition since the programmable logic element is integrated into the microprocessor, 2201, the programmable logic element is implemented in the same technology as the rest of the microprocessor, 2201,- and hence the speed difference between the programmable logic element and the rest of the microprocessor can be kept at a minimum. Yet another advantage of this implementation is the feedback of flags to the instruction decoder for use in the next instruction, which could be a conditional branch/ jump based on the flags from the Programmable Logic Execution Unit, 2106.

When a bit field analysis is to be performed the microprocessor, 2201, sends the bit field (e.g. a variable or an input value) to the programmable logic element, 2205, which uses the bit field as an input word. The output word - the result of the specified Boolean function applied to the input word - is sent back to the microprocessor, 2201, for further processing. When the bit field analysis is part of a FSM routine, any internal registers in the programmable logic element, 2205, may be advantageously employed to store a representation of the current state.

Figure 23 shows a functional block diagram of an example of an implementation of a programmable logic execution unit. The input, 2311, may consist of one or two operands (e.g. 8, 16, 32, or 64 bit words). These inputs, 2311, are passed on to a pre-processing unit, 2312, which may perform different types of pre-processing functions such as but not limited to rotation of the bits, binary AND, OR or XOR between two sets of bit sequences (two operands), etc. The purpose of the pre-processing function, 2312, is to be able to perform simple bit manipulations on the input operands before these are send to the programmable logic element, 2307. The functions performed in the pre-processing function, 2311, resembles the rotating and logical operations performed by the ALU, 2104, described previously. The output, 2305, of the pre-processing function, 2312, and the states, 2310, of the programmable logic execution unit, which are stored in the registers, 2309, are used as the input word to the programmable logic element, 2307. The programmable logic element performs the pre-programmed Boolean function on the input word resulting in the output word.

The output word, 2308, of the programmable logic element, 2307, is divided into three different sub-output words. Each of these output words, 2308, may be a result of separate Boolean functions in the programmable logic element, 2307, or they may be the result of the same Boolean function and thus the bits of any one of the three output words will have matching counterparts in the two other output words.

The fist group of bits in the output word, 2308, is used as flags, 2303, which are send to the instruction decoder, 2101, and may be used in the following basic microprocessor instruction. The following basic microprocessor instructions will thus be able to perform conditional jumps based on the values of the flags.

As an example of the advantage of these flags consider the previous example of an input processing FSM. In this FSM the flags may be used to trigger a conditional jump to a processing routine which processes the input value.

A second set of output bits, 2308, may be latched in the registers, 2309, and used as a new state, 2310, of the programmable logic execution unit. Such a state value may be advantageously used in FSM as a representation of the current state of the FSM.

The last set of the bits of the output word, 2308, is made available, 2306, to the rest of the functional blocks of the microprocessor, 2101 - 2103, in the same way as output from the other execution units, 2108, would be.

The programmable logic execution unit is controlled and programmed by a separate function, 2304. The programming and control function, 2304, receives control signals, 2301, from the instruction decoder, 2101, and programming information, 2302, from the instruction decoder, 2101, or direct from the outside through the input/output element, 2103.

This makes it possible to program the programmable logic execution unit either directly by employing basic microprocessor instructions, or by a separate and external to the microprocessor control element.

To emphasize the difference between the present invention and prior art, it should be noted that the programmable logic will be part of the microprocessor core, and not an element used by a microprocessor. This makes it possible to include new instructions in the microprocessor instruction set in order to use the Programmable Execution Unit directly in the microprocessor program as easy as e.g. adding two integers. This is an extension of the previously defined Iterative Programmable Solutions used in prior art, in which several instructions must be executed to use the Boolean functions that is not implemented, in contrast to the present invention which uses Boolean Function Programmability to modify or re-program the Boolean functions, in order to eliminate the need of an iterative process.

## Examples of Use

By executing a software program, the microprocessor system can perform a number of different operations and solve a number of different problems. One basic operation in such software programs may be the analysis of a bit field (a binary representation of a variable, an input value etc.). Such an analysis may be used in numerous software routines, such as in a routine which analyses inputs from an input device, in decision routines where inputs values or variables forms the basis for the decision, in a Finite State Machine (FSM), etc.

A FSM is a sequential routine which is based on three basic elements:

　　1. a set of input events or input signals,
　　2. a set of FSM states, and
　　3. a set of rules describing for each given state to which state the FSM should proceed based on the input events.

In addition to this, output signals may also be included in the FSM. These output signals may be used for starting different processing routines.

As an example of an FSM consider the following input routine. The example FSM contains two stages: Do and Wait. In the state Wait the FSM waits for an input form the user. When a key has been pressed the FSM analyses the value of the input (the bit field) and if the value matches a certain pattern the FSM continues in the state Do, in which it issues a signal to a processing routine, which processes the input. The processing routine sends a signal back to the FSM when it is done, upon which the FSM falls back into the Wait state.

A bit field analysis is typically implemented with a relative large sequence of basic microprocessor instructions. In a software program where a bit field analysis or several bit field analyses are used in an iterative way the delay caused by this iterative operation may become significant which may limit the performance of the system.

The bit field analysis task can be specified as a function on an input sequence of bits resulting in an output sequence of bits used by the given software routine for the following data processing. The output sequence of bits could contain such information as the next state in the FSM, a new (binary) value for a variable, a binary code representing the action to perform, a flag for further use by the software program in the case of a match of a bit pattern, etc.

Another example of use is to add new specialized calculation or translation instructions for use in the microprocessor program, by programming the new execution unit with the inputs and outputs of such a new calculation function. As an example consider the following problem, where parts of a 32-bit word is used to address a location in external memory. An example algorithm for this could be:

1. Load 32-bit word into register A
2. Copy register A to register B
3. AND register A with 0xFF0000
4. Shift Right Register A 16 bit
5. AND register B with 0xFF
6. Add register B to register A
7. Multiply register A by 4

To illustrate the algorithm, consider the input $(a_{31},..,a_1)$ = (0010010.11001100.01010101.10011001). When applied to the above algorithm, the output would be (00000000.00000011.00110010.01100100). As described in earlier sections, the association between such a binary input and a binary output can be implemented with a Boolean function.

For an amount of inputs limited only by the size of the PLEU, the output could be stored, thus creating Boolean functions that maps/calculates the specified inputs to the correct output pattern. If a range of inputs is implemented, the PLEU can be used as a specialized execution unit for an algorithm, executing the calculation in one internal microprocessor cycle instead of 7 as in the above algorithm. In this way, it is possible to program the programmable execution unit to perform specialized calculations, thus improving overall performance significantly if the substituted algorithm is used often.

Another example of use is brute force hash decoding. Hash coding is a process where an input is applied to a function, which cannot be reversed. This means that the output cannot be used to calculate the input. This can also be described as an irreversible function. Thus, a brute force method, where a list of different input are first coded with the hash function and then matched against a list of outputs, must be used. Normally this would be implemented with a table lookup function, which would search through the list of known outputs with each encoded input. The search is therefore dependent of the size of the output list. It could require a lot of bit field analysis to implement such a search function.

Another example of use is as an integrated part of a Forwarding Engine. In such a Forwarding Engine a microprocessor with a Programmable Logic Execution Unit may advantageously be employed. The Microprocessor with a PLEU may be employed for tasks such as:

1. Network address analysis (employing methods described in the present invention);
2. Calculation of check fields in the data package by setting up the calculation rule of the check field(s) in the PLEU;
3. Calculation of statistic figures/numbers both in the data packages and for use by the Router and/or for use by Network Management Systems by employing the PLEU which may be programmed to calculate the figures/numbers
4. For scrambling of parts of or of the full data package by employing the PLEU as a data scrambler. The data scrambling may be performed by the Microprocessor with a PLEU as code conversion (e.g. from 4 bit to 5 bit coding) and/or as PRBS scrambling. The scrambling function on bit or byte level of the data package may advantageously be done by the PLEU by programming it to perform the code conversion and/or by programming it to perform PRBS scrambling using e.g. its internal register and the Boolean programmable structure of the PLEU.

**Claims**

1. A method of analysing input words or patterns for use in an analysis system, said method comprising an analysis phase of

   • inputting at least one input word comprising a plurality of bits to be analysed, and
   • processing said at least one input word thereby providing an output word comprising one or more bits,

   **characterized in that** said processing comprises a step of performing by one or more logic devices one or more calculation rules, each calculation rule using all bits of said at least one input word and each calculation rule resulting in an output bit of said output word, the number of calculation rules being equal to the number of bits in said output word, said calculation rules being at least part of one or more processing functions used for determining said output word from said at least one input word.

2. A method according to claim 1, **characterized in that**, said one or more calculation rules are being performed by said one or more logic devices being implemented in hardware and being re-programmable thereby allowing implementation of new calculation rules and updating of existing calculation rules.

3. A method according to claims 1-2, **characterized in that** said at least one input word to be analysed comprises network addresses in a communication network, and the analysis system is an address analysis system.

4. A method according to claim 3, **characterized in that** said input words to be analysed comprises other network packet information in addition to the network address.

5. A method according to claims 1 - 4, **characterized in that** said output word has the form of an action number.

6. A method according to any one of the claims 1 - 5, **characterized in that** said calculation rules comprise one or more fuzzy logic functions.

7. A method according to any one of the claims 1 - 5, **characterized in that** said calculation rules comprise one or more Boolean logic functions.

8. A method according to claim 7, **characterized in that** said one or more Boolean logic functions can be defined by sum of product terms, and a calculation rule for a given bit of said output word is calculated as a sum of product terms, said product terms each being associated with the bits in the output word that an input word should activate.

9. A method according to any one of the claims 1 - 8, **characterized in that** said processing comprises a step of pre-processing said input word into a predetermined input word format prior to performing said one or more calculation rules.

10. A method according to any of the claims 1 - 9, **characterized in that** a result of said one or more calculation rule operations is an intermediate output word being post-processed in order to obtain said output word.

11. A method according to claims 3, 5 - 10, **characterized in that** said address analysis comprises a longest prefix address analysis operation, said longest prefix address analysis operation preferably being part of said one or more calculation rules.

12. A method according to any one of the claims 1 - 11, **characterized in that** said one or more processing functions comprises one or more prioritising functions, said prioritising functions preferably being part of said one or more calculation rules.

13. A method according to claims 2 - 12, **characterized in that** said programmable logic device has a structure for processing logic functions, said structure comprising a re-programmable priority element or function (PPE) for prioritising between several possible output words being matched by the same input word.

14. A method according to any one of the claims 1 - 4, 6 - 13, **characterized in that** said programmable logic device structure further comprises an AND-processing plane for obtaining product terms as a function of calculation rule inputs, where each calculation rule input consists of either true, false or "don't care".

15. A method according to claim 14, **characterized in that** said programmable logic device structure further comprises an OR plane for obtaining a sum of product terms from the AND plane to thereby derive calculation rule output results.

16. A method according to claims 13 - 15, **characterized in that** said calculation rule output result is determined by giving different priorities to the different Boolean functions to be processed.

17. A method according to claim 14 or 15, **characterized in that** product terms obtained in the AND plane are prioritised by a prioritising function to thereby select one of several activated product terms to be forwarded to the OR plane in order to obtain a calculation rule output result, said prioritising function selecting the product term having the highest priority value or number.

18. A method according to claim 17, **characterized in that** the programmable priority element assigns said prioritising function to each of the simultaneously activated product terms.

19. A method according to claim 17 or 18, **characterized in that** weight values or priority codes are assigned to each product term.

20. A method according to claim 17 or 18, **characterized in that** the programmable priority element assigns said weight values or priority codes to said product terms obtained in the AND plane to thereby select one of several activated product terms.

21. A method according to claim 19 or 20, **characterized in that** said weight value assigned to each of the product terms equals the number of "antifuses" programmed in the AND plane for generating that product term.

22. A method according to any one of the claims 1 - 21, **characterized in that** said method further comprises a learning phase of updating the analysis system based on received information of a relationship between network addresses, priorities and action numbers, said analysing phase being halted during said updating.

23. A method according to claim 22, **characterized in that** said updating comprises a programming or re-programming of the one or more programmable logic devices.

24. A method according to claim 22 or 23, **characterized in that** the analysis system is updated with changes in the communication network.

25. A method according to claim 24, **characterized in that** said changes comprises one or more of

- new terminal addresses,
- changes of locations of network terminals, and
- changes in network topology.

26. A method according to any one of the claims 1 - 25, **characterized in that** said programmable logic devices comprise memory logic cells, each cell comprising a re-programmable memory element for storing a match-value and preferably also a logic element for comparing an input bit value to a stored match-value.

27. A method according to any one of the claims 1 - 26, **characterized in that** said method is used in a forwarding engine.

28. A system for analysing input words or patterns, said system comprising

- means for receiving at least one input word comprising a plurality of bits to be analysed, and
- means for processing said at least one input word thereby providing an output word comprising one or more bits,

**characterized in that** said system comprises one or more logic devices for performing one or more calculation rules, each calculation rule using all bits of said at least one input word and each calculation rule resulting in an output bit of said output word, the number of calculation rules being equal to the number of bits in said output word, said calculation rules being at least part of one or more processing functions used for determining said output word from said at least one input word.

29. A system according to claim 28, **characterized in that** said one or more logic devices are implemented in hardware and being re-programmable thereby allowing implementation of new calculation rules and updating of existing calculation rules.

30. A system according to claims 28 - 29, **characterized in that** said at least one input word to be analysed represents network addresses in a communication network and said analysis system is an address analysis system.

31. A system according to claims 28 - 30, **characterized in that** said output word has the form of an action number.

32. A system according to any one of the claims 28 - 31, **characterized in that** said calculation rules comprise one or more fuzzy logic functions.

33. A system according to any one of the claims 28 - 32, **characterized in that** said calculation rules comprise one or more Boolean logic functions.

34. A system according to any one of the claims 28 - 32, **characterized in that** at least one of said calculation rules are defined by Boolean logic functions, which can be defined by sum of product terms, and a specific calculation rule for a given bit of the output word is calculated as a sum of product terms, said product terms each being associated with the bits in the output word that an input word should activate.

35. A system according to any one of the claims 28 - 34, **characterized in that** said processing functions comprises a pre-processing functions and/or a post-processing functions.

36. A system according to any one of the claims 28 - 35, **characterized in that** at least one of said programmable logic devices comprises a re-programmable priority element/function (PPE) for prioritising between several possible output results being matched by the same input word.

37. A system according to claim 36, **characterized in that** the programmable logic device further comprisesan AND-processing plane for obtaining product terms as a function of calculation rule inputs, and each calculation rule input consists of either true, false or "don't care".

38. A system according to claim 37, **characterized in that** the programmable logic device further comprises an OR plane for obtaining sum of product terms from the AND plane to thereby derive calculation rule output results.

39. A system according to claims 37 or 38, **characterized in that** said priority element is adapted to prioritise by selecting the activated product term having the highest priority value or number.

40. A system according to any one of the claims 28 - 39, **characterized in that** said programmable logic devices comprise memory logic cells, each cell comprising a re-programmable memory element for storing a match-value.

41. A system according to claim 40, **characterized in that** the programming or re-programming of new calculation rules or of updated calculation rules into the programmable logic device hardware is performed by programming the memory elements.

42. A system according to any one of the claims 28 - 41, **characterized in that** at least one of said programmable logic devices are implemented in a single integrated chip.

43. A system according to any one of the claims 28 -42, **characterized in that** said processing functions for performing the analysis are implemented by a processing unit in a single integrated chip.

44. A system according to any one of the previous claims 28 - 43 **characterized in that**, said system comprises a single chip micro-processor architecture comprising

   • an instruction decoding unit,
   • an address calculation unit,
   • input/output elements,
   • an arithmetic logical unit (ALU), and
   • a programmable logic execution unit (PLEU) for performing one or more of said logic functions, said logic execution unit being re-programmable thereby allowing implementation of new logic functions.

45. A system according to claim 44, **characterized in that** the programmable logic execution unit is adapted to perform Boolean logic functions.

46. A system according to claim 44 or 45, **characterized in that** said architecture is adapted for analysing bit fields.

47. A system according to any of the claims 44 - 46, **characterized in that** said programmable logic execution unit comprises memory logic cells, each cell comprising a re-programmable memory element for storing a match-value and preferably also a logic element for comparing an input bit value to a stored match-value.

48. A system according to claim 47, **characterized in that** said memory elements are implemented by use of Static Random Access Memory (SRAM) or Dynamic Random Access Memory (DRAM).

49. A system according to claim 44 or 48, **characterized in that** said logic elements are implemented by use of MOS-technology and/or CMOS-technology.

50. A system according to any of the claims 47 - 49, **characterized in that** the programming or reprogramming of new logic functions into the programmable logic execution unit is performed by programming the memory elements.

51. A system according to any of the claims 44 - 50, **characterized in that** different logic functions can be programmed into the logic execution unit by one or more of

- basic instructions from the internal instruction unit, and
- instructions from an external control unit via the input/output elements.

52. A system according to any one of the claims 44 - 51, **characterized in that** said logic execution unit comprises a programmable logic device or element and/or a programmable logic array (PLA) element comprising the AND-processing plane, the priority element and the OR-processing plane.

53. A system according to claim 52, **characterized in that** the logic execution unit comprises registers for storing states of said logic devices.

54. A system according to any one of the claims 44 - 53, **characterized in that** said logic execution unit comprises a programmable priority function unit.

55. A system according to any of the claims 44 - 54, **characterized in that** the logic execution unit comprises said AND-processing plane structure and/or an OR-processing plane structure.

56. A system according to any one of the claims 44 - 55, **characterized in that** said micro-processor is adapted to being programmed to execute bit field analysis by one basic micro-processor instruction.

57. A system according to claims 28 - 56, **characterized in that** said system comprises a reprogrammable electronic structure for comparing an input signal of one or more bits with stored or pre-programmed match-values, said structure comprising
one or more memory logic cell(s) or element(s) (MLC), each cell comprising at least one re-programmable memory element for storing a match-value and/or at least one logic element for comparing an input value to the stored match-value.

58. A system according to claim 57, **characterized in that** said logic comparison of the input value to the stored match-value comprises one or more logic operations, and that said logic operations may comprise AND functions and/or OR functions.

59. A system according to claims 57 - 58, **characterized in that** a memory logic cell comprises a one bit memory element and/or a logic element for comparing a one bit input to the stored bit.

60. A system according to any one of the claims 57-59, **characterized in that** at least two one bit memory elements or memory logic cells are grouped together to allow storing of a 2 bit match-value and forming a ternary memory cell allowing a "don't care" state.

61. A system according to any one of the claims 57 - 60, **characterized in that** several memory logic cells are used to form at least part of a memory logic structure (MLS).

62. A system according to claim 60, **characterized in that** several ternary memory logic cells are used to form at least part of a ternary memory logic structure (TMLS).

63. A system according to any of the claims 57 - 59, **characterized in that** several memory logic cells are used to implement a ternary Contents Addressable Memory (CAM).

64. A system according to claim 62, **characterized in that** a ternary memory logic structure (TMLS) is arranged to form at least part of a programmable AND-processing structure or plane.

65. A system according to claim 61, **characterized in that** a memory logic structure (MLS) is arranged to form at least part of a programmable priority element structure.

66. A system according to claims 28 - 65, **characterized in that** said system comprises at least one hardware re-configurable or re-programmable electronic logic device structure (PLD) for processing logic functions, said structure comprising

any of the structures according to claims 57 - 65.

67. A system according to claims 28 - 65, **characterized in that** said system comprises at least one hardware re-configurable or re-programmable electronic logic device structure (PLD) for processing logic functions, said structure comprising

a re-programmable priority element or function (PPE) for prioritising between several output results being matched by the same input word.

68. A system according to claims 28 - 67, **characterized in that** said logic element is implemented by use of 4 transistors.

69. A system according to claim 68, **characterized in that** said logic element has two inputs and one output.

70. A system according to claim 69, **characterized in that** one or more memory logic cells are structured so that an input bit signal is fed to the first logic element input and the complementary of the input bit signal is fed to the second logic element input, with a comparison output signal being given on the logic element output.

71. A system according to any of the claims 67 - 70, **characterized in that** several memory logic cells are used to form at least part of a memory logic structure (MLS), each memory logic cell having as input an input bit signal and its complementary signal.

72. A system according to claims 68 - 71, **characterized in that** the first memory logic cell of the ternary memory logic cell has an input bit signal fed to the first input and a logic false to the second input, the second memory logic cell has the complementary of the input bit signal fed to the first input and a logic false to the second input, and the outputs of the first and second memory logic cells preferably being ANDed together.

73. A system according to claim 72, **characterized in that** several ternary memory logic cells are used to form at least part of a ternary memory logic structure (TMLS), each ternary memory logic cell having as input an input bit signal and its complementary signal.

74. A system according to claim 71, **characterized in that** said system further comprising a ternary Contents Addressable Memory (CAM) being implemented by use of several memory logic cells, with the priority element being adapted to prioritise between multiple simultaneously activated match-lines of the CAM, to thereby select the output.

75. A system according to any one of the claims 71 - 74, **characterized in that** a row in a MLS structure and/or a row in a TMLS structure can be programmed or re-programmed in one clock-cycle or one memory-write cycle.

76. A system according to any one of the claims 67-75, **characterized in that** a programming or reprogramming cycle is performed by inputting an input or address word, an associated priority number, and an associated output word.

77. A system according to any one of the claims 28 - 76, **characterized in that** said micro-processor is integrated into a forwarding engine.

78. A system according to any one of the claims 28 - 77, **characterized in that** said system further comprises a forwarding engine.

79. A method according to claims 1 - 27 where minimizing Boolean function calculation rules (BFCR) are used for performing longest prefix match address analysis, wherein the calculation rules comprises prioritisation rules, and wherein a programmable logic device (PLD) is to be updated or programmed according to a routing table or network address table comprising entries in the form of bit pattern of network addresses and associated output action numbers and priority values or numbers, said method comprising

> a) sorting the routing table according to priority numbers, so that for each sub-set (A) of entries in the routing table with the same priority number, the corresponding Boolean calculation rules (R) are set up on the form of sum of products,
> b) minimizing the set of calculation rules (R) obtained in the step of sorting so as to obtain a minimized set of calculation rules (R') on the form of sum of products,
> c) updating the programmable logic device using the minimized set of calculation rules (R') and the associated priority number, and
> d) repeating steps a-c for all sub-set of entries having a common priority number.

**80.** A method according to claim 79, **characterized in that** Espresso minimization technique is used.

**Patentansprüche**

**1.** Verfahren zum Analysieren von Eingabewörtern oder -mustern zum Gebrauch in einem Analysesystem, wobei das Verfahren eine Analysephase aufweist, bei der

- mindestens ein Eingabewort eingegeben wird, das eine Vielzahl von zu analysierenden Bits aufweist, und
- das mindestens eine Eingabewort verarbeitet wird, um dadurch ein Ausgabewort zu bilden, das ein oder mehr Bits aufweist,

**dadurch gekennzeichnet, daß** die Verarbeitung einen Schritt aufweist, bei dem durch einen oder mehrere Logikbausteine eine oder mehrere Rechenvorschriften berechnet werden, wobei jede Rechenvorschrift sämtliche Bits des mindestens einen Eingabeworts nutzt und jede Rechenvorschrift in einem Ausgabebit des Ausgabeworts resultiert, wobei die Anzahl der Rechenvorschriften gleich der Anzahl von Bits in dem Ausgabewort ist, wobei die Rechenvorschriften mindestens Teil von einer oder mehreren Verarbeitungsfunktionen sind, die zum Bestimmen des Ausgabeworts aus dem mindestens einen Eingabewort genutzt werden.

**2.** Verfahren nach Anspruch 1, **dadurch gekennzeichnet, daß** die ein oder mehr Rechenvorschriften von den ein oder mehr Logikbausteinen ausgeführt werden, die in Hardware implementiert und umprogrammierbar sind, wodurch die Implementierung von neuen Rechenvorschriften und die Aktualisierung von bestehenden Rechenvorschriften möglich ist.

**3.** Verfahren nach den Ansprüchen 1 bis 2, **dadurch gekennzeichnet, daß** das mindestens eine zu analysierende Eingabewort Netzadressen in einem Kommunikationsnetz aufweist und das Analysesystem ein Adreßanalysesystem ist.

**4.** Verfahren nach Anspruch 3, **dadurch gekennzeichnet, daß** die zu analysierenden Eingabewörter zusätzlich zu der Netzadresse andere Netzpaketinformation aufweisen.

**5.** Verfahren nach den Ansprüchen 1 bis 4, **dadurch gekennzeichnet, daß** das Ausgabewort die Form einer Arbeitsnummer hat.

**6.** Verfahren nach einem der Ansprüche 1 bis 5, **dadurch gekennzeichnet, daß** die Rechenvorschriften eine oder mehrere Fuzzy-Logikfunktionen aufweisen.

**7.** Verfahren nach einem der Ansprüche 1 bis 5, **dadurch gekennzeichnet, daß** die Rechenvorschriften eine oder mehrere Boolesche Logikverknüpfungen aufweisen.

**8.** Verfahren nach Anspruch 7, **dadurch gekennzeichnet, daß** die ein oder mehr Booleschen Logikverknüpfungen durch Produktsummenterme definiert werden können und eine Rechenvorschrift für ein gegebenes Bit des Ausgabeworts als eine Summe von Produkttermen berechnet wird, wobei die Produktterme jeweils den Bits in dem Ausgabewort zugeordnet sind, die ein Eingabewort aktivieren sollte.

**9.** Verfahren nach einem der Ansprüche 1 bis 8, **dadurch gekennzeichnet, daß** die Verarbeitung einen Schritt der Vorverarbeitung des Eingabeworts zu einem vorbestimmten Eingabewortformat vor der Ausführung der ein oder mehr Rechenvorschriften aufweist.

10. Verfahren nach einem der Ansprüche 1 bis 9, **dadurch gekennzeichnet, daß** ein Resultat der ein oder mehr Rechenvorschriftoperationen ein Zwischen-Ausgabewort ist, das nachverarbeitet wird, um das Ausgabewort zu erhalten.

11. Verfahren nach den Ansprüchen 3, 5 bis 10, **dadurch gekennzeichnet, daß** die Adreßanalyse eine Längste-Kennung-Adreßanalyseoperation aufweist, wobei die Längste-Kennung-Adreßanalyseoperation bevorzugt ein Teil der ein oder mehr Rechenvorschriften ist.

12. Verfahren nach einem der Ansprüche 1 bis 11, **dadurch gekennzeichnet, daß** die ein oder mehr Verarbeitungsfunktionen eine oder mehrere Priorisierungsfunktionen aufweisen, wobei die Priorisierungsfunktionen bevorzugt Teil der einen oder mehreren Rechenvorschriften sind.

13. Verfahren nach den Ansprüchen 2 bis 12, **dadurch gekennzeichnet, daß** der programmierbare Logikbaustein eine Struktur zur Verarbeitung von logischen Verknüpfungen hat, wobei die Struktur ein umprogrammierbares Prioritätselement oder eine -funktion (PPE) zur Priorisierung zwischen mehreren möglichen Ausgabewörtern hat, mit denen das gleiche Eingabewort übereinstimmt.

14. Verfahren nach einem der Ansprüche 1 bis 4, 6 bis 13, **dadurch gekennzeichnet, daß** die programmierbare Logikbausteinstruktur ferner eine UND-Verarbeitungsebene aufweist, um Produktterme als eine Funktion von Rechenvorschrifteingaben zu erhalten, wobei jede Rechenvorschrifteingabe entweder aus wahr, unwahr oder "beliebig" besteht.

15. Verfahren nach Anspruch 14, **dadurch gekennzeichnet, daß** die programmierbare Logikbausteinstruktur ferner eine ODER-Ebene aufweist, um eine Summe von Produkttermen von der UND-Ebene zu erhalten und dadurch Rechenvorschrift-Ausgaberesultate abzuleiten.

16. Verfahren nach den Ansprüchen 13 bis 15, **dadurch gekennzeichnet, daß** das Rechenvorschrift-Ausgaberesultat dadurch bestimmt wird, daß die verschiedenen zu verarbeitenden Booleschen Verknüpfungen unterschiedliche Prioritäten erhalten.

17. Verfahren nach Anspruch 14 oder 15, **dadurch gekennzeichnet, daß** in der UND-Ebene erhaltene Produktterme von einer Priorisierungsfunktion priorisiert werden, um dadurch einen von mehreren aktivierten Produkttermen zur Weiterleitung zu der ODER-Ebene zu wählen, um ein Rechenvorschrift-Ausgaberesultat zu erhalten, wobei die Priorisierungsfunktion den Produktterm wählt, der den höchsten Prioritätswert oder die höchste Prioritätsnummer hat.

18. Verfahren nach Anspruch 17, **dadurch gekennzeichnet, daß** das programmierbare Prioritätselement die Priorisierungsfunktion jedem der gleichzeitig aktivierten Produktterme zuweist.

19. Verfahren nach Anspruch 17 oder 18, **dadurch gekennzeichnet, daß** jedem Produktterm Gewichtungswerte oder Prioritätscodes zugewiesen werden.

20. Verfahren nach Anspruch 17 oder 18, **dadurch gekennzeichnet, daß** das programmierbare Prioritätselement die Gewichtswerte oder Prioritätscodes den in der UND-Ebene erhaltenen Produkttermen zuweist, um dadurch einen von mehreren aktivierten Produkttermen zu wählen.

21. Verfahren nach Anspruch 19 oder 20, **dadurch gekennzeichnet, daß** der jedem der Produktterme zugewiesene Gewichtswert gleich der Anzahl von "Antifuses" ist, die in der UND-Ebene zur Erzeugung dieses Produktterms programmiert sind.

22. Verfahren nach einem der Ansprüche 1 bis 21, **dadurch gekennzeichnet, daß** das Verfahren ferner eine Lernphase der Aktualisierung des Analysesystems auf der Basis von empfangener Information über eine Beziehung zwischen Netzadressen, Prioritäten und Arbeitsnummern aufweist, wobei die Analysephase während dieser Aktualisierung angehalten wird.

**23.** Verfahren nach Anspruch 22, **dadurch gekennzeichnet, daß** die Aktualisierung eine Programmierung oder Umprogrammierung des einen oder der mehreren programmierbaren Logikbausteine aufweist.

**24.** Verfahren nach Anspruch 22 oder 23, **dadurch gekennzeichnet, daß** das Analysesystem bei Änderungen in dem Kommunikationsnetz aktualisiert wird.

**25.** Verfahren nach Anspruch 24, **dadurch gekennzeichnet, daß** die Änderungen eines oder mehrere von folgenden aufweisen:

- neue Endstellenadressen,
- Ortsveränderungen von Netzendstellen und
- Änderungen der Netztopologie.

**26.** Verfahren nach einem der Ansprüche 1 bis 25, **dadurch gekennzeichnet, daß** die programmieren Logikbausteine logische Speicherzellen aufweisen, wobei jede Zelle ein umprogrammierbares Speicherelement zum Speichern eines Übereinstimmungswerts und bevorzugt auch ein Logikelement zum Vergleichen eines Eingabebitwerts mit einem gespeicherten Übereinstimmungswert aufweist.

**27.** Verfahren nach einem der Ansprüche 1 bis 26, **dadurch gekennzeichnet, daß** das Verfahren in einer Weiterleitungsmaschine angewandt wird.

**28.** System zum Analysieren von Eingabewörtern oder -mustern, wobei das System folgendes aufweist:

- Einrichtungen zum Empfang von mindestens einem Eingabewort, das eine Vielzahl von zu analysierenden Bits aufweist, und
- Einrichtungen zum Verarbeiten mindestens eines Eingabeworts, um dadurch ein Ausgabewort zu bilden, das ein oder mehr Bits aufweist,

**dadurch gekennzeichnet, daß** das System ein oder mehr Logikbausteine zur Durchführung von ein oder mehr Rechenvorschriften aufweist, wobei jede Rechenvorschrift sämtliche Bits des mindestens einen Eingabeworts nutzt und jede Rechenvorschrift in einem Ausgabebit des Ausgabeworts resultiert, wobei die Anzahl von Rechenvorschriften gleich der Anzahl von Bits in dem Ausgabewort ist, wobei die Rechenvorschriften zumindest Teil von ein oder mehr Verarbeitungsfunktionen sind, die zum Bestimmen des Ausgabeworts aus dem mindestens einen Eingabewort genutzt werden.

**29.** System nach Anspruch 28, **dadurch gekennzeichnet, daß** der eine oder die mehreren Logikbausteine in Hardware implementiert und umprogrammierbar sind, so daß die Implementierung von neuen Rechenvorschriften und die Aktualisierung von vorhandenen Rechenvorschriften möglich ist.

**30.** System nach den Ansprüche 28 bis 29, **dadurch gekennzeichnet, daß** das mindestens eine zu analysierende Eingangswort Netzadressen in einem Kommunikationsnetz darstellt und das Analysesystem ein Adreßanalysesystem ist.

**31.** System nach den Ansprüchen 28 bis 30, **dadurch gekennzeichnet, daß** das Ausgabewort die Form einer Arbeitsnummer hat.

**32.** System nach einem der Ansprüche 28 bis 31, **dadurch gekennzeichnet, daß** die Rechenvorschriften ein oder mehr Fuzzy-Logikverknüpfungen aufweisen.

**33.** System nach einem der Ansprüche 28 bis 32, **dadurch gekennzeichnet, daß** die Rechenvorschriften ein oder mehr Boolesche Logikverknüpfungen aufweisen.

**34.** System nach einem der Ansprüche 28 bis 32, **dadurch gekennzeichnet, daß** mindestens eine der Rechenvorschriften durch Boolesche Logikverknüpfungen definiert ist, die durch Produktsummenterme definiert werden können, und eine bestimmte Rechenvorschrift für ein gegebenes Bit des Ausgabeworts als eine Summe von Produkttermen berechnet wird, wobei die Produktterme jeweils den Bits in dem Ausgabewort zugeordnet sind, die ein Eingabewort aktivieren sollte.

**35.** System nach einem der Ansprüche 28 bis 34, **dadurch gekennzeichnet, daß** die Verarbeitungsfunktionen Vorverarbeitungsfunktionen und/oder Nachverarbeitungsfunktionen aufweisen.

**36.** System nach einem der Ansprüche 28 bis 35, **dadurch gekennzeichnet, daß** mindestens einer der programmierbaren Logikbausteine ein umprogrammrierbares Prioritätselement/-funktion (PPE) zur Priorisierung zwischen mehreren möglichen Ausgaberesultaten, mit denen das gleiche Eingabewort übereinstimmt, aufweist.

**37.** System nach Anspruch 36, **dadurch gekennzeichnet, daß** der programmierbare Logikbaustein ferner eine UND-Verarbeitungsebene zum Erhalt von Produkttermen als eine Funktion von Rechenvorschrifteingaben aufweist und jede Rechenvorschrifteingabe entweder aus wahr, unwahr oder "beliebig" besteht.

**38.** System nach Anspruch 37, **dadurch gekennzeichnet, daß** der programmierbare Logikbaustein ferner eine ODER-Ebene aufweist, um eine Summe von Produkttermen von der UND-Ebene zu erhalten und dadurch Rechenvorschrift-Ausgaberesultate abzuleiten.

**39.** System nach Anspruch 37 oder 38, **dadurch gekennzeichnet, daß** das Prioritätselement so ausgebildet ist, daß es eine Priorität durch Wahl des aktivierten Produktterms mit dem höchsten Prioritätswert oder der höchsten Prioritätsnummer zuweist.

**40.** System nach einem der Ansprüche 28 bis 39, **dadurch gekennzeichnet, daß** die programmierbaren Logikbausteine logische Speicherzellen aufweisen und jede Zelle ein umprogrammierbares Speicherelement zur Speicherung eines Übereinstimmungswerts aufweist.

**41.** System nach Anspruch 40, **dadurch gekennzeichnet, daß** die Programmierung oder Umprogrammierung neuer Rechenvorschriften oder aktualisierter Rechenvorschriften in die programmierbare. Logikbaustein-Hardware durch Programmieren der Speicherelemente erfolgt.

**42.** System nach einem der Ansprüche 28 bis 41, **dadurch gekennzeichnet, daß** mindestens einer der programmierbaren Logikbausteine in einem einzigen integrierten Chip implementiert ist.

**43.** System nach einem der Ansprüche 28 bis 42, **dadurch gekennzeichnet, daß** die Verarbeitungsfunktionen zur Durchführung der Analyse durch eine Verarbeitungseinheit in einem einzigen integrierten Chip implementiert sind.

**44.** System nach einem der vorhergehenden Ansprüche 28 bis 43, **dadurch gekennzeichnet, daß** das System eine Einchip-Mikroprozessorarchitektur aufweist, die folgendes aufweist:

- eine Befehlsdecodiereinheit,
- eine Adreßberechnungseinheit,
- Eingabe-/Ausgabeelemente,
- ein Rechenwerk (ALU) und
- eine programmierbare Logikausführungseinheit (PLEU) zur Durchführung von einer oder mehreren der Logikfunktionen, wobei die Logikausführungseinheit umprogrammierbar ist und dadurch die Implementierung von neuen Logikfunktionen ermöglicht.

**45.** System nach Anspruch 44, **dadurch gekennzeichnet, daß** die programmierbare Logikausführungseinheit so ausgebildet ist, daß sie Boolesche Verknüpfungsfunktionen ausführt.

**46.** System nach Anspruch 44 oder 45, **dadurch gekennzeichnet, daß** die Architektur für die Analyse von Bitfeldern ausgebildet ist.

**47.** System nach einem der Ansprüche 44 bis 46, **dadurch gekennzeichnet, daß** die programmierbare Logikausführungseinheit logische Speicherzellen aufweist, wobei jede Zelle ein umprogrammierbares Speicherelement zur Speicherung eines Übereinstimmungswerts und bevorzugt auch ein Logikelement zum Vergleichen eines Eingabebitwerts mit einem gespeicherten Übereinstimmungswert aufweist.

**48.** System nach Anspruch 47, daß die Speicherelemente durch Anwendung von statischem Speicher mit wahlfreiem Zugriff (SRAM) oder dynamischem Speicher mit wahlfreiem Zugriff (DRAM) implementiert sind.

**49.** System nach Anspruch 44 oder 48, **dadurch gekennzeichnet, daß** die Logikelemente durch Anwendung von MOS-Technologie und/oder CMOS-Technologie implementiert sind.

**50.** System nach einem der Ansprüche 47 bis 49, **dadurch gekennzeichnet, daß** die Programmierung oder Umprogrammierung von neuen Logikfunktionen in die programmierbare Logikausführungseinheit durch Programmieren der Speicherelemente erfolgt.

**51.** System nach einem der Ansprüche 44 bis 50, **dadurch gekennzeichnet, daß** verschiedene Logikfunktionen in die Logikausführungseinheit programmiert werden können durch einen oder mehrere von

- Grundbefehlen von der internen Befehlseinheit, und
- Befehlen von einer externen Steuerungseinheit über die Eingabe-/Ausgabeelemente.

**52.** System nach einem der Ansprüche 44 bis 51, **dadurch gekennzeichnet, daß** die Logikausführungseinheit einen programmierbaren Logikbaustein oder ein -element und/oder ein programmierbares Gate-Array-Element (PLA) aufweist, das die UND-Verarbeitungsebene, das Prioritätselement und die ODER-Verarbeitungsebene aufweist.

**53.** System nach Anspruch 52, **dadurch gekennzeichnet, daß** die Logikausführungseinheit Register zur Speicherung von Zuständen der Logikbausteine aufweist.

**54.** System nach einem der Ansprüche 44 bis 53, **dadurch gekennzeichnet, daß** die Logikausführungseinheit eine programmierbare Prioritätsfunktionseinheit aufweist.

**55.** System nach einem der Ansprüche 44 bis 54, **dadurch gekennzeichnet, daß** die Logikausführungseinheit die UND-Verarbeitungsebenenstruktur und/oder eine ODER-Verarbeitungsebenenstruktur aufweist.

**56.** System nach einem der Ansprüche 44 bis 55, **dadurch gekennzeichnet, daß** der Mikroprozessor so ausgebildet ist, daß er programmierbar ist, um eine Bitfeldanalyse aufgrund eines Mikroprozessor-Grundbefehls auszuführen.

**57.** System nach einem der Ansprüche 28 bis 56, **dadurch gekennzeichnet, daß** das System eine umprogrammierbare elektronische Struktur aufweist, um ein Eingangssignal aus ein oder mehr Bits mit gespeicherten oder vorprogrammierten Übereinstimmungswerten zu vergleichen, wobei die Struktur aufweist: eine oder mehrere logische Speicherzellen oder -elemente (MLC), wobei jede Zelle mindestens ein umprogrammierbares Speicherelement zur Speicherung eines Übereinstimmungswerts und/oder mindestens ein Logikelement zum Vergleichen eines Eingabewerts mit dem gespeicherten Übereinstimmungswert aufweist.

**58.** System nach Anspruch 57, **dadurch gekennzeichnet, daß** der logische Vergleich des Eingabewerts mit dem gespeicherten Übereinstimmungswert ein oder mehr logische Verknüpfungen aufweist und daß diese logischen Verknüpfungen UND-Funktionen und/oder ODER-Funktionen aufweisen können.

**59.** System nach den Ansprüchen 57 bis 58, **dadurch gekennzeichnet, daß** eine logische Speicherzelle ein Einbit-Speicherelement und/oder ein Logikelement zum Vergleichen einer Einbiteingabe mit dem gespeicherten Bit aufweist.

**60.** System nach einem der Ansprüche 57 bis 59, **dadurch gekennzeichnet, daß** mindestens zwei Einbit-Speicherelemente oder logische Speicherzellen zusammen gruppiert sind, um das Speichern eines 2-Bit-Übereinstimmungswerts und die Bildung einer ternären Speicherzelle, die einen "Beliebigkeits"-Zustand ermöglicht, zuzulassen.

**61.** System nach einem der Ansprüche 57 bis 60, **dadurch gekennzeichnet, daß** mehrere logische Speicherzellen verwendet werden, um mindestens einen Teil einer logischen Speicherstruktur (MLS) zu bilden.

**62.** System nach Anspruch 60, **dadurch gekennzeichnet, daß** mehrere ternäre logische Speicherzellen verwendet werden, um mindestens einen Teil einer ternären logischen Speicherstruktur (TMLS) zu bilden.

**63.** System nach einem der Ansprüche 57 bis 59, **dadurch gekennzeichnet, daß** mehrere logische Speicherzellen verwendet werden, um einen ternären inhaltsadressierbaren Speicher (CAM) zu implementieren.

**64.** System nach Anspruch 62, **dadurch gekennzeichnet, daß** eine ternäre logische Speicherstruktur (TMLS) so ausgebildet ist, daß sie zumindest einen Teil einer programmierbaren UND-Verarbeitungsstruktur oder -ebene bildet.

**65.** System nach Anspruch 61, **dadurch gekennzeichnet, daß** eine logische Speicherstruktur (MLS) so ausgebildet ist, da sie zumindest einen Teil einer programmierbaren Prioritätselementstruktur bildet.

**66.** System nach den Ansprüchen 28 bis 65, **dadurch gekennzeichnet, daß** das System mindestens eine mittels Hardware rekonfigurierbare oder umprogrammierbare elektronische Logikbausteinstruktur (PLD) zum Verarbeiten von Logikfunktionen aufweist, wobei die Struktur jede von den Strukturen nach den Ansprüchen 57 bis 65 aufweist.

**67.** System nach den Ansprüchen 28 bis 65, **dadurch gekennzeichnet, daß** das System mindestens eine mittels Hardware rekonfigurierbare oder umprogrammierbare elektronische Logikbausteinstruktur (PLD) zum Verarbeiten von Logikfunktionen aufweist, wobei die Struktur ein umprogrammierbares Prioritätselement oder eine solche -funktion (PPE) zur Priorisierung zwischen mehreren Ausgaberesultaten, mit denen das gleiche Eingabewort übereinstimmt, aufweist.

**68.** System nach den Ansprüchen 26 bis 67, **dadurch gekennzeichnet, daß** das Logikelement durch Anwendung von vier Transistoren implementiert ist.

**69.** System nach Anspruch 68, **dadurch gekennzeichnet, daß** das Logikelement zwei Eingänge und einen Ausgang hat.

**70.** System nach Anspruch 69, **dadurch gekennzeichnet, daß** ein oder mehr logische Speicherzellen so ausgebildet sind, daß ein Eingangsbitsignal dem ersten Eingang des Logikelements und das Komplement des Eingangsbitsignals dem zweiten Eingang des Logikelements zugeführt wird, wobei ein Vergleichs-Ausgangssignal an dem Ausgang des Logikelements gebildet wird.

**71.** System nach einem der Ansprüche 67 bis 70, **dadurch gekennzeichnet, daß** mehrere logische Speicherelemente verwendet werden, um zumindest einen Teil einer logischen Speicherstruktur (MLS) zu bilden, wobei jede logische Speicherzelle als Eingang ein Eingangsbitsignal und sein komplementäres Signal hat.

**72.** System nach den Ansprüchen 68 bis 71, **dadurch gekennzeichnet, daß** dem ersten Eingang der ersten logischen Speicherzelle der ternären logischen Speicherzelle ein Eingangsbitsignal und dem zweiten Eingang ein logisches Unwahr zugeführt wird, daß dem ersten Eingang der zweiten logischen Speicherzelle das Komplement des Eingangsbitsignals und dem zweiten Eingang ein logisches Unwahr zugeführt wird, und daß die Ausgänge der ersten und der zweiten logischen Speicherzelle bevorzugt miteinander UND-verknüpft sind.

**73.** System nach Anspruch 72, **dadurch gekennzeichnet, daß** mehrere ternäre logische Speicherzellen verwendet werden, um zumindest einen Teil einer ternären logischen Speicherstruktur (TMLS) zu bilden, wobei jede ternäre logische Speicherzelle als Eingang ein Eingangsbitsignal und dessen komplementäres Signal hat.

**74.** System nach Anspruch 71, **dadurch gekennzeichnet, daß** das System ferner einen ternären inhaltsadressierbaren Speicher (CAM) hat, der durch Anwendung von mehreren logischen Speicherzellen implementiert ist, wobei das Prioritätselement so ausgebildet ist, daß es zwischen einer Vielzahl von gleichzeitig aktivierten Übereinstimmungsleitungen des CAM priorisiert, um dadurch den Ausgangswert zu wählen.

**75.** System nach einem der Ansprüche 71 bis 74, **dadurch gekennzeichnet, daß** eine Zeile in einer MLS-Struktur und/oder eine Zeile in einer TMLS-Struktur in einem Taktzyklus oder einem Speicherschreibzyklus programmiert oder umprogrammiert werden kann.

**76.** System nach einem der Ansprüche 67 bis 75, **dadurch gekennzeichnet, daß** ein Programmier- oder Umprogrammierzyklus ausgeführt wird, indem ein Eingabe- oder Adreßwort, eine zugehörige Prioritätszahl und ein zugehöriges Ausgabewort eingegeben werden.

**77.** System nach einem der Ansprüche 28 bis 76, **dadurch gekennzeichnet, daß** der Mikroprozessor in eine Weiter-leitungsmaschine integriert ist.

**EP 1 070 287 B1**

**78.** System nach einem der Ansprüche 28 bis 77, **dadurch gekennzeichnet, daß** das System ferner eine Weiterleitungsmaschine aufweist.

**79.** Verfahren nach den Ansprüchen 1 bis 27, wobei minimierende Boolesche Verknüpfungsrechenvorschriften (BFCR) angewandt werden, um eine Längste-Kennung-Übereinstimmungsadreßanalyse durchzuführen, wobei die Rechenvorschriften Priorisierungsregeln aufweisen und wobei ein programmierbarer Logikbaustein (PLD) nach Maßgabe einer Leitwegtabelle oder Netzadreßtabelle zu aktualisieren oder zu programmieren ist, die Einträge in Form von Bitmustern von Netzadressen und zugehörigen Arbeitsnummern und Prioritätswerten oder -nummern aufweist, wobei das Verfahren die folgenden Schritte aufweist:

a) Sortieren der Leitwegtabelle nach Maßgabe von Prioritätsnummern, so daß für jede Untermenge (A) von Einträgen in der Leitwegtabelle mit derselben Prioritätsnummer die entsprechenden Booleschen Rechenvorschriften (R) in Form einer Summe von Produkten aufgestellt werden,
b) Minimieren der Menge von Rechenvorschriften (R), die in dem Sortierschritt erhalten werden, um eine minimierte Menge von Rechenvorschriften (R') in Form einer Summe von Produkten zu erhalten,
c) Aktualisieren des programmierbaren Logikbausteins unter Nutzung der minimierten Menge von Rechenvorschriften (R') und der zugehörigen Prioritätsnummer, und
d) Wiederholen der Schritte a bis c für alle Untermengen von Einträgen, die eine gemeinsame Prioritätsnummer haben.

**80.** Verfahren nach Anspruch 79, **dadurch gekennzeichnet, daß** die Espresso-Minimierungstechnik angewandt wird.

**Revendications**

**1.** Procédé d'analyse de mots ou de configurations d'entrée destiné à être utilisé dans un système d'analyse, ledit procédé comportant une phase d'analyse

■ d'entrée d'au moins un mot d'entrée comportant une pluralité de bits à analyser, et
■ de traitement dudit au moins un mot d'entrée, ce qui aboutit à la génération d'un mot de sortie comportant un ou plusieurs bit(s),

**caractérisé en ce que** ledit traitement comprend une étape d'application par un ou plusieurs dispositif(s) logique(s) d'une ou plusieurs règle(s) de calcul, chaque règle de calcul utilisant tous les bits dudit au moins un mot d'entrée et chaque règle de calcul ayant pour résultat la génération d'un bit dudit mot de sortie, le nombre de règles de calcul étant égal au nombre de bits dudit mot de sortie, lesdites règles de calcul étant au moins une partie d'une ou plusieurs fonction(s) de traitement utilisées pour déterminer ledit mot de sortie à partir dudit au moins un mot d'entrée.

**2.** Procédé selon la revendication 1, **caractérisé en ce que** lesdites une ou plusieurs règle(s) de calcul sont appliquées par lesdits un ou plusieurs dispositif(s) logique(s) mis en oeuvre sous forme matérielle et étant reprogrammables, ce qui permet ainsi la mise en oeuvre de nouvelles règles de calcul et la mise à jour de règles de calcul existantes.

**3.** Procédé selon les revendications 1 et 2, **caractérisé en ce que** ledit au moins un mot d'entrée à analyser comporte des adresses de réseau d'un réseau de communication, et le système d'analyse est un système d'analyse d'adresses.

**4.** Procédé selon la revendication 3, **caractérisé en ce que** ledit mot d'entrée à analyser comporte d'autres informations sous forme de paquets relatives à un réseau en plus de l'adresse de réseau.

**5.** Procédé selon les revendications 1 à 4, ledit mot de sortie se présente sous la forme d'un numéro d'action.

**6.** Procédé selon l'une quelconque des revendications 1 à 5,**caractérisé en ce que** lesdites règles de calcul comprennent une ou plusieurs fonction(s) de logique floue.

**7.** Procédé selon l'une quelconque des revendications 1 à 5, **caractérisé en ce que** lesdites règles de calcul comprennent une ou plusieurs fonction(s) de logique booléenne.

**8.** Procédé selon la revendication 7, **caractérisé en ce que** lesdites une ou plusieurs fonction(s) de logique booléenne peu(ven)t être définie(s) par une somme de termes de produit, et une règle de calcul pour un bit donné dudit mot de sortie est calculée comme étant une somme de termes de produit, lesdits termes de produit étant chacun associés aux bits du mot de sortie qu'un mot d'entrée doit activer.

**9.** Procédé selon l'une quelconque des revendications 1 à 8, **caractérisé en ce que** ledit traitement comprend une étape de prétraitement dudit mot d'entrée pour le mettre dans un format de mot d'entrée prédéterminé avant d'appliquer lesdites une ou plusieurs règle(s) de calcul.

**10.** Procédé selon l'une quelconque des revendications 1 à 9, **caractérisé en ce que** un résultat de ladite une ou plusieurs opération(s) de règle de calcul est un mot de sortie intermédiaire étant traité ultérieurement afin d'obtenir ledit mot de sortie.

**11.** Procédé selon les revendications 3,et 5 à 10, **caractérisé en ce que** ladite analyse d'adresse comporte une opération d'analyse d'adresse à préfixe le plus long, ladite opération d'analyse d'adresse à préfixe le plus long étant, de préférence, une partie desdites une ou plusieurs règle(s) de calcul.

**12.** Procédé selon l'une quelconque des revendications 1 à 11, **caractérisé en ce que** lesdites une ou plusieurs fonction(s) de traitement comporte une ou plusieurs fonctions de hiérarchisation, lesdites fonctions de hiérarchisation étant, de préférence, une partie desdites une ou plusieurs règle(s) de calcul.

**13.** Procédé selon les revendications 2 à 12, **caractérisé en ce que** ledit dispositif logique programmable a une structure de traitement de fonctions logiques; ladite structure comportant un élément ou une fonction de priorité reprogrammable (PPE - Programmable Priority Element) pour hiérarchiser plusieurs mots de sortie possibles qui peuvent correspondre au même mot d'entrée.

**14.** Procédé selon l'une quelconque des revendications 1 à 4, 6 à 13, **caractérisé en ce que** ladite structure de dispositif logique programmable comprend en outre une matrice de traitement ET pour obtenir des termes de produit en tant que fonction d'entrées d'une règle de calcul où chaque entrée de règle de calcul a la valeur vraie, fausse ou indifférente.

**15.** Procédé selon la revendication 14, **caractérisé en ce que** ladite structure de dispositif logique programmable comprend en outre une matrice OU pour obtenir une somme de termes de produit à partir de la matrice ET pour en déduire ainsi les résultats de sortie d'une règle de calcul.

**16.** Procédé selon les revendications 13 à 15, **caractérisé en ce que** ledit résultat de sortie d'une règle de calcul est déterminé en donnant différentes priorités aux différentes fonctions booléennes à traiter.

**17.** Procédé selon la revendication 14 ou 15, **caractérisé en ce que** les termes de produit obtenus dans la matrice ET sont hiérarchisés par une fonction de hiérarchisation pour sélectionner ainsi un ou plusieurs termes de produit activés à transmettre à la matrice OU afin d'obtenir un résultat de sortie d'une règle de calcul , ladite fonction de hiérarchisation sélectionnant le terme de produit ayant le niveau ou numéro de priorité le plus élevé.

**18.** Procédé selon la revendication 17, **caractérisé en ce que** l'élément de priorité programmable applique ladite fonction de hiérarchisation à chacun des termes de produit activés simultanément.

**19.** Procédé selon la revendication 17 ou 18, **caractérisé en ce que** des valeurs de pondération ou des codes de priorité sont affectés à chaque terme de produit.

**20.** Procédé selon la revendication 17 ou 18, **caractérisé en ce que** l'élément de priorité programmable affecte lesdites valeurs de pondération ou lesdits codes de priorité aux dits termes de produit obtenus dans la matrice ET pour ainsi sélectionner un ou plusieurs terme(s) de produit activé(s).

**21.** Procédé selon la revendication 19 ou 20, **caractérisé en ce que** ladite valeur de pondération affectée à chaque terme de produit est égale au nombre de «antifuses » programmés dans la matrice ET pour générer ce terme de produit.

**22.** Procédé selon l'une quelconque des revendications 1 à 21, **caractérisé en ce que** ledit procédé comporte en outre une phase d'apprentissage de mise à jour du système d'analyse en fonction des informations reçues relatives à une relation entre les adresses de réseau, les priorités et les numéros d'action, ladite phase d'analyse étant interrompue pendant ladite mise à jour.

**23.** Procédé selon la revendication 22, **caractérisé en ce que** ladite mise à jour comprend une programmation ou une reprogrammation d'un ou plusieurs dispositif(s) logique(s) programmable(s).

**24.** Procédé selon la revendication 22 ou 23, **caractérisé en ce que** le système d'analyse est mis à jour avec les modifications du réseau de communication.

**25.** Procédé selon la revendication 24, **caractérisé en ce que** lesdites modifications comportent un ou plusieurs des éléments suivants:

■ nouvelles adresses de terminaux,
■ changements d'emplacement des terminaux du réseau, et
■ changements dans la topologie du réseau.

**26.** Procédé selon l'une quelconque des revendications 1 à 25, **caractérisé en ce que** lesdits dispositifs logiques programmables comprennent des cellules logiques de mémoire, chaque cellule comportant un élément de mémoire reprogrammable pour enregistrer une valeur de référence, et de préférence, également un élément logique pour comparer une valeur de bit d'entrée à une valeur de référence enregistrée.

**27.** Procédé selon l'une quelconque des revendications 1 à 26, **caractérisé en ce que** ledit procédé est utilisé dans un moteur de réacheminement.

**28.** Système d'analyse de mots ou de configuration d'entrée, ledit système comportant

■ Un moyen de réception d'au moins un mot d'entrée comportant une pluralité de bits à analyser, et
■ Un moyen de traitement dudit au moins un mot d'entrée, ce qui permet de générer un mot de sortie comportant un ou plusieurs bit(s),

   **Caractérisé en ce que** ledit système comprend un ou plusieurs dispositif(s) logique(s) pour appliquer une ou plusieurs règle(s) de calcul, chaque règle de calcul utilisant tous les bits dudit au moins un mot d'entrée et chaque règle de calcul ayant pour résultat la génération d'un bit de sortie dudit mot de sortie, le nombre de règles de calcul étant égal au nombre de bits dudit mot de sortie, lesdites règles de calcul étant au moins une partie d'une ou plusieurs fonction(s) de traitement utilisées pour déterminer ledit mot de sortie à partir dudit au moins un mot d'entrée.

**29.** Système selon la revendication 28, **caractérisé en ce que** lesdits un ou plusieurs dispositif(s) logique(s) sont mis en oeuvre sous forme matérielle et sont reprogrammables, ce qui permet ainsi la mise en oeuvre de nouvelles règles de calcul et la mise à jour de règles de calcul existantes.

**30.** Système selon les revendications 28 et 29, **caractérisé en ce que** ledit au moins un mot d'entrée à analyser représente des adresses de réseau dans un réseau de communication et ledit système d'analyse est un système d'analyse d'adresses.

**31.** Système selon les revendications 28 à 30, **caractérisé en ce que** ledit mot de sortie se présente sous la forme d'un numéro d'action.

**32.** Système selon l'une quelconque des revendications 28 à 31, **caractérisé en ce que** lesdites règles de calcul comprennent une ou plusieurs fonction(s) de logique floue.

**33.** Système selon l'une quelconque des revendications 28 à 32, **caractérisé en ce que** lesdites règles de calcul comprennent une ou plusieurs fonction(s) de logique booléenne.

**34.** Système selon l'une quelconque des revendications 28 à 32,**caractérisé en ce que** au moins une desdites règles de calcul est définie par des fonctions de logique booléenne, qui peuvent être définies par une somme de termes de produit, et une règle de calcul spécifique pour un bit donné du mot de sortie est calculée comme étant une somme de termes de produit, lesdits termes de produit étant associés aux bits du mot de sortie qu'un mot d'entrée doit activer.

**35.** Système selon l'une quelconque des revendications 28 à 34, **caractérisé en ce que** lesdites fonctions de traitement comportent des fonctions de prétraitement et/ou des fonctions de post-traitement.

**36.** Système selon l'une quelconque des revendications 28 à 35, **caractérisé en ce que** au moins un desdits dispositifs logiques programmables comporte un élément ou une fonction de priorité reprogrammable (PPE) pour hiérarchiser plusieurs résultats de sortie possibles qui peuvent correspondre au même mot d'entrée.

**37.** Système selon la revendication 36, **caractérisé en ce que** le dispositif logique programmable comporte en outre une matrice de traitement ET pour obtenir des termes de produit en tant que fonction d'entrées d'une règle de calcul où chaque entrée de règle de calcul a la valeur vraie, fausse ou indifférente.

**38.** Système selon la revendication 37, **caractérisé en ce que** le dispositif logique programmable comporte en outre une matrice OU pour obtenir une somme de termes de produit à partir de la matrice ET pour en déduire ainsi les résultats de sortie d'une règle de calcul.

**39.** Système selon les revendications 37 ou 38, **caractérisé en ce que** ledit élément de priorité est conçu pour effectuer des hiérarchisations en sélectionnant le terme de produit activé ayant le niveau ou numéro de priorité le plus élevé.

**40.** Système selon l'une quelconque des revendications 28 à 39, **caractérisé en ce que** lesdits dispositifs logiques programmables comprennent des cellules logiques de mémoire, chaque cellule comportant un élément de mémoire reprogrammable pour enregistrer une valeur de référence.

**41.** Système selon la revendication 40, **caractérisé en ce que** la programmation ou la reprogrammation de nouvelles règles de calcul ou de règles de calcul mises à jour dans le dispositif logique matériel programmable est effectuée en programmant les éléments de mémoire.

**42.** Système selon l'une quelconque des revendications 28 à 41, **caractérisé en ce que** au moins un desdits éléments logiques programmables est implanté dans une puce intégrée unique.

**43.** Système selon l'une quelconque des revendications 28 à 42, **caractérisé en ce que** lesdites fonctions de traitement pour effectuer l'analyse sont mises en oeuvre par une unité de traitement implantée dans une puce intégrée unique.

**44.** Système selon l'une quelconque des revendications précédentes 28 à 43, **caractérisé en ce que** ledit système comporte une architecture de microprocesseur à puce unique comprenant

- ■ une unité de décodage d'instructions,
- ■ une unité de calcul d'adresses,
- ■ des éléments d'entrée/sortie,
- ■ une unité logique arithmétique (ALU - Arithmetic Logical Unit), et
- ■ une unité d'exécution logique programmable (PLEU - Programmable Logic Execution Unit) pour exécuter une ou plusieurs desdites fonctions logiques, ladite unité logique d'exécution étant reprogrammable, ce qui permet ainsi la mise en oeuvre de nouvelles fonctions logiques.

**45.** Système selon la revendication 44, **caractérisé en ce que** l'unité logique d'exécution programmable est conçue pour exécuter des fonctions de logique booléenne.

**46.** Système selon la revendication 44 ou 45, **caractérisé en ce que** ladite architecture est conçue pour analyser des champs binaires.

**47.** Système selon l'une quelconque des revendications 44 à 46, **caractérisé en ce que** ladite unité logique d'exécution programmable comprend des cellules logiques de mémoire, chaque cellule comportant un élément de mémoire reprogrammable pour enregistrer une valeur de référence et, de préférence, également un élément logique pour comparer une valeur de bit d'entrée à une valeur de référence enregistrée.

**48.** Système selon la revendication 47, **caractérisé en ce que** lesdits éléments de mémoire sont mis en oeuvre en utilisant une mémoire à accès aléatoire statique (SRAM - Static Random Access Memory) ou une mémoire à accès aléatoire dynamique (DRAM - Dynamic Random Access Memory).

**49.** Système selon la revendication 44 ou 48, **caractérisé en ce que** lesdits éléments logiques sont mis en oeuvre en utilisant une technologie MOS et/ou une technologie CMOS.

**50.** Système selon l'une quelconque des revendications 47 à 49, **caractérisé en ce que** la programmation ou la reprogrammation de nouvelles fonctions logiques dans l'unité logique d'exécution programmable est effectuée en programmant les éléments de mémoire.

**51.** Système selon l'une quelconque des revendications 44 à 50, **caractérisé en ce que** les différentes fonctions logiques peuvent être programmées dans l'unité logique d'exécution par une ou plusieurs des instructions suivantes

- ■ Instructions de base provenant de l'unité interne d'instructions, et
- ■ Instructions provenant d'une unité de commande externe par l'intermédiaire des éléments d'entrée/sortie.

**52.** Système selon l'une quelconque des revendications 44 à 51, **caractérisé en ce que** ladite unité logique d'exécution comporte un dispositif ou un élément logique programmable et/ou un élément de matrice logique programmable (PLA - Programmable Logic Array) comprenant la matrice de traitement ET, l'élément de priorité et la matrice de traitement OU.

**53.** Système selon la revendication 52, **caractérisé en ce que** l'unité logique d'exécution comporte des registres pour mémoriser les états desdits dispositifs logiques.

**54.** Système selon l'une quelconque des revendications 44 à 53, **caractérisé en ce que** ladite unité logique d'exécution comporte une unité de fonction de hiérarchisation programmable.

**55.** Système selon l'une quelconque des revendications 44 à 54, **caractérisé en ce que** l'unité logique d'exécution comporte ladite structure de matrice de traitement ET et/ou une structure de matrice de traitement OU.

**56.** Système selon l'une quelconque des revendications 44 à 55, **caractérisé en ce que** ledit microprocesseur est conçu pour être programmé afin d'effectuer une analyse de champ binaire à l'aide d'une instruction de base du microprocesseur.

**57.** Système selon les revendications 28 à 56, **caractérisé en ce que** ledit système comporte une structure électronique reprogrammable pour comparer un signal d'entrée constitué d'un ou plusieurs bit(s) à des valeurs de référence mémorisées ou préprogrammées, ladite structure comportant une ou plusieurs cellule(s) ou un ou plusieurs élément(s) logique(s) de mémoire (MLC Memory Logic Cell), chaque cellule comportant au moins un élément de mémoire reprogrammable pour enregistrer une valeur de référence et/ou au moins un élément logique pour comparer une valeur d'entrée à la valeur de référence enregistrée.

**58.** Système selon la revendication 57, **caractérisé en ce que** ladite comparaison logique de la valeur d'entrée à la valeur de référence enregistrée comprend une ou plusieurs opération(s) logique(s) et que lesdites opérations logiques peuvent comprendre des fonctions ET et/ou des fonctions OU.

**59.** Système selon les revendications 57 et 58, **caractérisé en ce que** une cellule logique de mémoire comporte un élément de mémoire d'un bit et/ou un élément logique pour comparer un bit d'entrée au bit mémorisé.

**60.** Système selon l'une quelconque des revendications 57 à 59, **caractérisé en ce que** au moins deux éléments de mémoire ou cellules logiques de mémoire d'un bit sont regroupés pour permettre l'enregistrement d'une valeur de référence de deux bits et constituer une cellule de mémoire ternaire permettant un état "indifférent".

**61.** Système selon l'une quelconque des revendications 57 à 60, **caractérisé en ce que** plusieurs cellules logiques de mémoire sont utilisées pour constituer au moins une partie d'une structure logique de mémoire (MLS - Memory Logic Structure).

**62.** Système selon la revendication 60, **caractérisé en ce que** plusieurs cellules logiques de mémoire ternaires sont utilisées pour constituer au moins une partie d'une structure logique de mémoire ternaire (TMLS - Ternary Memory Logic Structure) .

**63.** Système selon l'une quelconque des revendications 57 à 59, **caractérisé en ce que** l'on utilise plusieurs cellules logiques de mémoire pour mettre en oeuvre une mémoire ternaire adressable par le contenu (CAM - Contents Addressable Mémory).

**64.** Système selon la revendication 62, **caractérisé en ce que** une structure logique de mémoire ternaire (TMLS) est agencée pour constituer au moins une partie d'une structure ou d'une matrice programmable de traitement ET.

**65.** Système selon la revendication 61, **caractérisé en ce qu'**une structure logique de mémoire (MLS) est utilisée pour constituer au moins une partie d'une structure d'éléments de priorité programmables.

**66.** Système selon les revendications 28 à 65, **caractérisé en ce que** ledit système comprend au moins une structure matérielle de dispositifs logiques électroniques reconfigurables ou reprogrammables (PLD - Programmable Logic Device) pour traiter des fonctions logiques, ladite structure comportant n'importe laquelle des structures selon les revendications 57 à 65.

**67.** Système selon les revendications 28 à 65, **caractérisé en ce que** ledit système comporte au moins une structure matérielle de dispositifs logiques électroniques reconfigurables ou reprogrammables (PLD) pour traiter des fonctions logiques, ladite structure comportant
un élément ou une fonction de priorité reprogrammable (PPE) pour hiérarchiser plusieurs résultats de sortie correspondant au même mot d'entrée.

**68.** Système selon les revendications 28 à 67, **caractérisé en ce que** ledit élément logique est mis en oeuvre en utilisant 4 transistors.

**69.** Système selon la revendication 68, **caractérisé en ce que** ledit élément logique comporte deux entrées et une sortie.

**70.** Système selon la revendication 69, **caractérisé en ce qu'**une ou plusieurs cellule(s) logique(s) de mémoire (est) sont structurée(s) de façon à ce que un signal binaire d'entrée soit appliqué à la première entrée de l'élément logique et le complémentaire du signal binaire d'entrée soit appliqué à la deuxième entrée de l'élément logique , un signal de sortie de comparaison étant généré à la sortie de l'élément logique.

**71.** Système selon l'une quelconque des revendications 67 à 70, **caractérisé en ce que** plusieurs cellules logiques de mémoire sont utilisées pour constituer au moins une partie d'une structure logique de mémoire (MLS), chaque cellule logique de mémoire ayant comme entrée un signal binaire d'entrée et son signal complémentaire.

**72.** Système selon les revendications 68 à 71, **caractérisé en ce que** la première cellule logique de mémoire de la cellule logique de mémoire ternaire a un signal binaire d'entrée appliqué à la première entrée et une valeur logique fausse appliquée à la deuxième entrée, la deuxième cellule logique de mémoire a le signal complémentaire du signal binaire d'entrée appliqué à la première entrée et une valeur logique fausse appliquée à la deuxième entrée, et on fait de préférence subir une opération ET aux sorties des première et deuxième cellules logiques de mémoire.

**73.** Système selon la revendication 72, **caractérisé en ce que** plusieurs cellules logiques de mémoire ternaire sont utilisées pour constituer au moins une partie d'une structure logique de mémoire ternaire (TMLS), chaque cellule logique de mémoire ternaire ayant comme entrée un signal binaire d'entrée et son signal complémentaire.

**74.** Système selon la revendication 71, **caractérisé en ce que** ledit système comporte en outre une mémoire ternaire adressable par le contenu (CAM) qui st mise en oeuvre en utilisant plusieurs cellules logiques de mémoire, l'élément de priorité étant conçu pour hiérarchiser les multiples lignes de correspondance activées simultanément de la mémoire CAM, pour ainsi sélectionner le signal de sortie.

**75.** Système selon l'une quelconque des revendications 71 à 74, **caractérisé en ce qu'**une rangée d'une structure MLS et/ou une rangée d'une structure TMLS peuvent être programmées ou reprogrammées en un seul cycle d'horloge ou un seul cycle d'écriture en mémoire.

**76.** Système selon l'une quelconque des revendications 67 à 75, **caractérisé en ce qu'**un cycle de programmation ou de reprogrammation est effectué en entrant un mot d'entrée ou d'adresse, un numéro de priorité associé, et un mot de sortie associé.

**77.** Système selon l'une quelconque des revendications 28 à 76, **caractérisé en e que** ledit système est intégré dans un moteur de réacheminement.

**78.** Système selon l'une quelconque es revendications 28 à 77, **caractérisé en ce que** ledit système comporte un moteur de réacheminement.

**79.** Procédé selon les revendications 1 à 27, dans lequel on utilise des règles de calcul de fonctions booléennes (BFCR - Boolean Function Calculation Rule) de minimalisation pour effectuer une analyse d'adresses de correspondance à préfixe le plus long, dans lequel les règles de calcul comportent des règles de hiérarchisation, et dans lequel un dispositif logique programmable (PLD) doit être mis à jour ou programmé selon une table d'aiguillage ou une table d'adresses de réseau comportant des données d'entrée sous forme de configurations binaires d'adresses de réseau et de numéros d'action de sortie et des niveau ou numéro de priorité associés, ledit procédé comprenant

a) le tri de la table d'aiguillage selon les niveaux de priorité, de façon à ce que pour chaque sous-ensemble (A) d'entrées de la table d'aiguillage qui ont le même niveau de priorité, les règles de calcul booléennes correspondantes (R) se présentent sous la forme de sommes de produits,
b) la minimalisation de l'ensemble de règles de calcul (R) obtenues dans l'étape de tri de façon à obtenir un ensemble minimal de règles de calcul (R') sous la forme de sommes de produits,
c) la mise à jour du dispositif logique programmable en utilisant l'ensemble minimal de règles de calcul (R') et le niveau de priorité associé, et
d) la répétition des étapes a à c pour toutes les entrées du sous ensemble ayant un niveau de priorité commun.

**80.** Procédé selon la revendication 79, **caractérisé en ce que** on utilise la technique de minimalisation Espresso.

Figure 1

101A 102A 103 104A

101I 102I 104I

CONTROL, ADMINISTRATION AND
MAINTENANCE UNIT

105

Figure 1

201 202 203

204

205

Figure 2

301

302

304

307

MICRO-
PROCESSOR

32

24

8

MEMORY
WITH
$2^{24}$
ENTRIES

303

305

306

MEMORY
WITH
$2^{20}$
ENTRIES

308

309

ACTION
NUMBER

310

Figure 3

Figure 4

Figure 5

Figure 6

Figure 7

Figure 8

902
NETWORK
ADDRESS

901

PROCESSING
FUNCTION

PLD

904

ACTION
NUMBER

903

Figure 9

1001

input pattern

1009

output pattern

a₁  a₂  a₃  a₄  1002

b₁  b₂  b₃

1003

1004

pt 1

pt 2

pt 3

pt 4

pt 5

pt 6

pt 7

1008

1006

AND plane

1005

OR plane

1007

Figure 10

1101

input pattern

$a_1$ $a_2$ $a_3$ $a_4$  1102

1103

1104

pt 1
pt 2
pt 3
pt 4
pt 5
pt 6
pt 7

1106

Programmable Prioritizing Function

1107

1108

1111

output pattern

$b_1$ $b_2$ $b_3$

1110

AND plane
1105

OR plane
1109

Figure 11

1202

1201

AND PLANE

1203

Programmable Prioritizing Function

1206

1207

OR PLANE

1204  1205

1208

Figure 12

1301

1302A

PLA (A)

1302B

PLA (B)

1303A 1304A 1305 1303B 1304B

1306

GLOBAL PRIORITY FUNCTION

1303C 1304C 1303D 1304D

1302C

PLA (C)

1302D

PLA (D)

Figure 13

Figure 14

1501

1502

Ternary Memory-Logic Structure

1507

1509

Product terms

1503

Memory-Logic Structure

1508

1505

Memory-Logic Structure

1504

1506

Figure 15

1601

1602

CAM array

1605

1604

Match Lines

1603

Memory-Logic Structure

1606

Figure 16

~mb

1701

Match

1703

SRAM cell

d        ~d

1705        1707

1706        1708

mb

1702

1704

Figure 17

Figure 18

Figure 19

Figure 20

Figure 21

Figure 22

Figure 23

$hp_{(i-1)}^j$

2403

$LZ_i^0$

$LZ_i^j$

$hp_i^j$

2401

$\sim b_i^j$      $b_i^j$

Memory cell

2402

$LZ_i^n$

$AZ_i$

Figure 24